(19) Europäisches Patentamt
European Patent Office
Office européen des brevets

(11) **EP 3 130 190 B1**

(12) **EUROPEAN PATENT SPECIFICATION**

(45) Date of publication and mention
of the grant of the patent:
**24.01.2024 Bulletin 2024/04**

(21) Application number: **15769742.6**

(22) Date of filing: **27.03.2015**

(51) International Patent Classification (IPC):
**H04L 1/00** *(2006.01)*     **H04W 52/24** *(2009.01)*
**H04W 52/34** *(2009.01)*

(52) Cooperative Patent Classification (CPC):
**H04L 1/0002; H04L 1/0015; H04W 52/346;**
H04L 1/0026; H04L 2001/0093; H04W 52/241

(86) International application number:
**PCT/CN2015/075312**

(87) International publication number:
**WO 2015/144094 (01.10.2015 Gazette 2015/39)**

(54) **MULTI-USER, MULTIPLE ACCESS, SYSTEMS, METHODS, AND DEVICES**

SYSTEME, VERFAHREN UND VORRICHTUNGEN MIT MEHRFACHZUGANG UND MEHREREN BENUTZERN

SYSTÈMES, MÉTHODES ET DISPOSITIFS À MULTIPLES UTILISATEURS ET ACCÈS MULTIPLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.03.2014 US 201461972015 P**
**26.03.2015 US 201514670182**

(43) Date of publication of application:
**15.02.2017 Bulletin 2017/07**

(73) Proprietor: **Huawei Technologies Co., Ltd.**
**Longgang District**
**Shenzhen, Guangdong 518129 (CN)**

(72) Inventors:
• **NIKOPOUR, Hosein**
**Ottawa, Ontario K2S 0E6 (CA)**
• **YI, Zhihang**
**Shenzhen, Guangdong 518129 (CN)**
• **BAYESTEH, Alireza**
**Ottawa, Ontario K2K 1L8 (CA)**

(74) Representative: **Thun, Clemens**
**Mitscherlich PartmbB**
**Patent- und Rechtsanwälte**
**Karlstraße 7**
**80333 München (DE)**

(56) References cited:
CN-A- 101 682 381     US-A1- 2005 124 370
US-A1- 2011 085 513     US-A1- 2013 230 119

• RUI ZHANG ET AL: "Approaching MIMO-OFDM Capacity With Zero-Forcing V-BLAST Decoding and Optimized Power, Rate, and Antenna-Mapping Feedback", IEEE TRANSACTIONS ON SIGNAL PROCESSING, IEEE SERVICE CENTER, NEW YORK, NY, US, vol. 56, no. 10, 1 October 2008 (2008-10-01), pages 5191-5203, XP011231989, ISSN: 1053-587X, DOI: 10.1109/TSP.2008.928965
• Hosein Nikopour Et: "Sparse Code Multiple Access", 2013 IEEE 24th International Symposium on Personal, Indoor and Mobile Radio Communications: Fundamentals and PHY Track, 8 September 2013 (2013-09-08), XP055227113, Retrieved from the Internet: URL:http://ieeexplore.ieee.org/ielx7/66561 21/6666091/06666156.pdf?tp=&arnumber=66661 56&isnumber=6666091 [retrieved on 2015-11-10]
• HOSEIN NIKOPOUR ET AL.: 'Sparse Code Multiple Access' 2013 IEEE 24TH INTERNATIONAL SYMPOSIUM ON PERSONAL, INDOOR AND MOBILE RADIO COMMUNICATIONS: FUNDAMENTALS AND PHY TRACK 08 September 2013, XP055227113

- "SCMA for downlink multiple access of 5G wireless networks ED - NIKOPOUR H; ET AL", 1 January 2014 (2014-01-01), GLOBAL COMMUNICATIONS CONFERENCE (GLOBECOM), IEEE, PAGE(S) 3940 - 3945, XP002769939,

- "SCMA for downlink multiple access of 5G wireless networks ED - NIKOPOUR H; ET AL", 1 January 2014 (2014-01-01), GLOBAL COMMUNICATIONS CONFERENCE (GLOBECOM), IEEE, PAGE(S) 3940 - 3945, XP002769939,

## Description

### TECHNICAL FIELD

This disclosure is directed to systems, methods, and devices for multi-user, multiple access, and more particularly to a multi-user sparse code multiple access (MU-SCMA).

### BACKGROUND

Multi-user, multiple-input, multiple-output (MU-MIMO) is a well-known technique to share given time-frequency, space or power resources among multiple users in a wireless access network. One reason for the use of MU-MIMO is to increase the overall downlink (DL) throughput through user multiplexing. At the base station, multiple beams are formed over an array of antennas at a transmit point (TP) to serve multiple users distributed within the coverage area of the TP. Every MIMO layer is assigned to a receiver (e.g., a user equipment (UE)) while layers are orthogonally separated in the space domain assuming MIMO beamforming precoders are properly selected according to the channels of target users. At the receiver side, each user matches itself to its intended layer while the other MIMO layers are muted with no cross-layer interference, provided the precoders are properly designed. Despite the promising throughput gain and the simplicity of detection at user nodes (i.e. UEs), as a closed-loop system, MU-MIMO suffers from some practical difficulties in terms of channel aging and high overhead due to required feedback channel state information (CSI) reported by UEs to a serving TP. That is, CSI is required to form the best set of precoders for a selected set of users for multi-user transmission. If CSI is not well estimated, cross-layer interference limits the potential performance gain of MU-MIMO.

Further, US 2005/0124370 A1 refers to systems and techniques relating to wireless communications. The systems and techniques involve wireless communications wherein a module or communications device is configured to select a plurality of terminal pairs each having a transmitting terminal and a corresponding receiving terminal, determine a target quality parameter for each of the receiving terminals, and schedule simultaneous signal transmissions from each of the transmitting terminals to its corresponding receiving terminal, the scheduling of the simultaneous transmissions including selecting a power level for each of the signal transmissions that satisfies the target quality parameter for each of the receiving terminals.

RUI ZHANG ET AL, "Approaching MIMO-OFDM Capacity With Zero-Forcing V-BLAST Decoding and Optimized Power, Rate, and Antenna-Mapping Feedback", IEEE TRANSACTIONS ON SIGNAL PROCESSING, IEEE SERVICE CENTER, NEW YORK, NY, US, (20081001), vol. 56, no. 10, doi:10.1109/TSP.2008.928965, ISSN 1053-587X, pages 5191 - 5203, XP011231989, discloses capacity-approaching transmission schemes for the multiple-input multiple-output orthogonal frequency-division multiplexing (MIMO-OFDM) channel, under the assumption that the channel state information (CSI) is completely known at the receiver but only partially available at the transmitter via a limited-rate feedback channel.

Hosein Nikopour Et, "Sparse Code Multiple Access", 2013 IEEE 24th International Symposium on Personal, Indoor and Mobile Radio Communications: Fundamentals and PHY Track, (20130908), URL: http://ieeexplore.ieee.org/ielx7/6656121/6666091/06666156.pdf?tp=&arnumber=6666 156&isnumber=6666091, (20151110), XP055227113, discloses a new multiple access scheme so called sparse code multiple access (SCMA) which still enjoys the low complexity reception technique but with better performance compared to LDS.

### SUMMARY

The above mentioned problem is solved by the subject matter of the independent claims. Further implementation forms are provided in the dependent claims. Embodiments of this disclosure provide open-loop multiplexing with low sensitivity to channel aging and low feedback overhead. The disclosed embodiments feature code and power domain multiplexing of users over same time-frequency and space resources. Sparse code multiple access (SCMA) layers are allocated to multiple users. In certain embodiments, one or multiple layers might be allocated to a user. The disclosed embodiments provide pairing and power allocation to multiplexed users, based on knowledge of the users such as average quality of user channels (e.g., CQI), average rate of users, a scheduling criterion such as weighted sum-rate, or any other suitable system or user parameters.

The embodiments disclosed herein feature a mechanism for link-adaptation of paired users, which includes MCS (codebook size and code rate) and layer adjustment of paired users based on user parameters, such as allocated power, channel quality, average rate, and the like. Non-linear detection of multiplexed users may include SIC, MPA, and the like. The detection strategy may depend on the quality and rate of the user among the multiplexed user.

Other technical features may be readily apparent to one skilled in the art from the following figures, descriptions, and claims.

## BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:

FIGURE 1 illustrates a simplified SCMA system block diagram;

FIGURE 2 illustrates a typical structure of a SCMA code having six layers, one codebook per layer, four codewords per codebook, a spreading factor of four, and two non-zero elements per codeword;

FIGURE 3 illustrates a flow diagram of the algorithms used in a MU-SCMA transmitter in accordance with the principles of the present disclosure;

FIGURE 4 illustrates a block diagram of a MU-SCMA system in accordance with the principles of the present disclosure;

FIGURE 5 illustrates the capacity region of joint detection wherein point C represents single-user detection of user equipment (UE2) at user equipment (UE1) and then detection of UE1 after perfect hard successive interference cancellation (SIC) of UE2;

FIGURE 6 illustrates a capacity region needed to guarantee detection of $x_1$ at UE1 and $x_2$ at UE2 for a given power sharing factor $\alpha$ and a detection margin for user 2 of $\Delta$;

FIGURE 7 illustrates a Resource Block Group (RBG)-based pairing strategy versus a UE-based pairing strategy;

FIGURE 8 illustrates a flow diagram of a RBG-based UE pairing scheduler practiced in accordance with principles of the present disclosure;

FIGURE 9 illustrates a flow diagram of UE-based UE pairing scheduler practiced in accordance with principles of the present disclosure;

FIGURE 10 illustrates an overall comparison of OFDMA, NOMA, and MU-SCMA with varying fairness exponent in wideband (WB) scheduling;

FIGURE 11 illustrates an example communication system; and

FIGURE 12A and FIGURE 12B illustrate example devices that may implement the methods and teachings according to this disclosure.

## DETAILED DESCRIPTION

It may be advantageous to first set forth definitions of certain words and phrases used throughout this disclosure. The terms "include" and "comprise," as well as derivatives thereof, mean inclusion without limitation. The term "or" is inclusive. The phrases "associated with" and "associated therewith," as well as derivatives thereof, mean to include, be included within, interconnect with, contain, be contained within, connect to or with, couple to or with, be communicable with, cooperate with, interleave, juxtapose, be proximate to, be bound to or with, have, have a property of, or the like. The term "algorithm" is used herein to describe a method for calculating a function.

As will be appreciated by one skilled in the art, aspects of the present disclosure may be embodied as a method, system, device, or computer program product. Accordingly, aspects of the present disclosure may take the form of an entirely hardware embodiment, an entirely software embodiment (including firmware, resident software, micro-code, etc.), or an embodiment combining software and hardware, aspects that may all generally be referred to herein as a "circuit", "module", or "system". Field Programmable Gate Arrays (FPGAs), Application Specific Integrated Circuits (ASICs), Digital Signal Processors (DSPs) and general purpose processors alone or in combination, along with associated software, firmware, and glue logic may be used to construct the present disclosure.

Unless defined otherwise, all technical and scientific terms used herein have the same meaning as commonly understood by those of skill in the art to which this disclosure pertains. By way of example and not limitation, the term "base station" is broadly used herein to describe a piece of equipment that facilitates wireless communication between user equipment (UE) and a network. It may be used interchangeably with terms such as a base transceiver station (BTS), a Node-B (NodeB), an evolved NodeB (eNodeB), a Home NodeB, a Home eNodeB, a site controller, an access point (AP), transmit point (TP), a wireless router, a server, router, switch, or other processing entity with a wired or wireless network, as those skilled in the art will appreciate. Link adaptation, or adaptive modulation and coding (AMC), is used to denote the matching of the modulation, coding and other signal and protocol parameters to the conditions on the radio link. Such conditions may include the path loss, the interference due to signals coming from other transmitters, the sensitivity of the receiver, and the available transmitter power margin. The terms "UE" and "user" are used herein to represent any suitable end user device and may include such devices (or may be referred to) as a wireless transmit/receive unit (WTRU), mobile station, mobile node, mobile device, fixed or mobile subscriber unit, pager, cellular telephone, personal digital assistant (PDA), smartphone, laptop, computer, touchpad, wireless sensor, or consumer electronics device. Here, "mobile" station/node/device refers to a station/node/device that connects to a wireless (or mobile) network, and does not necessarily relate to the actual mobility of the station/node/device.

MU-MIMO is a well-known technique to share given time-frequency and power resources among multiple users in a downlink (DL) wireless access network. The objective is to increase the overall DL throughput through user multiplexing in the spatial domain. As an alternative to conventional spatial domain multiplexing, users can be multiplexed in code domain using techniques such as multi-carrier CDMA (MC-CDMA) which can be used to share power between co-paired UEs. MC-CDMA with quality of service (QoS) aware power allocation can boost the system performance or provide a more robust link adaptation.

MC-CDMA can also be used to achieve a desirable spectral efficiency with an advanced receiver. MC-CDMA can support an overloaded system (i.e. more users than the spreading factor) by implementing an advanced non-linear receiver. Assuming a spreading factor of $K$, each data symbol can be spread over up to $K$ resource elements (REs) by a spreading sequence. The transmitted signal in the DL or the received signal in the UL is the superposition of $J$ signatures. When $J < K$, the system is under-loaded, i.e., fewer data sequences (layers) are transmitted than are possible due to CDMA spreading. When $J \geq K$, the system is considered to be overloaded. In an overloaded scenario, more data sequences can be transmitted with potential spectral efficiency gain, as compared to an under-loaded scenario, provided that a complicated non-linear receiver is employed to decode the transmitted data. In an overloaded scenario, a conventional linear receiver cannot handle the interference between users and a non-linear receiver is required which typically has a high complexity especially for large number of overlaid data layers. One approach to addressing the high complexity is the use of low density signature (LDS) OFDM in which the CDMA signatures are sparse. LDS OFDM reduces the effective number of data layers colliding over each resource element (RE). Taking advantage of the sparsity of the signatures, a low-complexity interference cancellation detector may be developed based on a message passing algorithm (MPA) inspired from low density parity check channel codes (LDPC).

Similar to a MC-CDMA system, LDS-OFDM sends a symbol over multiple subcarriers. The spread version of symbol $u_j$ is $x_j = s_j u_j$ in which $s_j$ is a signature vector spreading the symbol $u_j$ over $K$ tones. One feature of LDS allows for there being only $d_v < K$ non-zero elements among the $K$ elements of a signature. In the DL, the spread symbols are combined and the transmitted signal is represented as $\mathbf{x} = \sum_{j=1}^{J} \mathbf{s}_j u_j$ where $J$ is the number of signatures. In general, the number of signatures can be more than the spreading factor to overload the system with non-orthogonal spreading sequences. Let $\mathbf{S} = [\mathbf{s}_j], j = 1, \ldots, J$ represent the $K \times J$ spreading matrix. An example of a LDS spreading matrix is shown below in (1) for $K = 4$ and $J = 6$.

$$\mathbf{S} = \begin{bmatrix} 0 & 1 & -1 & 0 & i & 0 \\ 1 & 0 & i & 0 & 0 & -1 \\ 0 & -1 & 0 & i & 0 & 1 \\ i & 0 & 0 & -1 & 1 & 0 \end{bmatrix} \tag{1}$$

Accordingly, up to 6 users can be served using LDS-OFDM over 4 tones with 150% overloading of the system. According to the signature matrix $\mathbf{S}$, i) signatures are not necessarily orthogonal, ii) signatures are sparse such that every signature has $d_v = 2$ nonzero elements over $K = 4$ tones, and iii) only $d_f = 3$ out of $J = 6$ signatures overlap over every tone (i.e. number of non-zero elements in each row). The number of colliding signatures per tones, $d_f$, plays an important role to control the complexity level of a LDS non-linear detector using MPA.

The DL received signal can be represented by $\mathbf{y} = \mathbf{h} \sum_{j=1}^{J} \mathbf{s}_j u_j + \mathbf{n}$ in which $\mathbf{h} = \text{diag}(h_1, \ldots, h_K)$ is the channel over the $K$ subcarriers in a single-input single-output (SISO) system. Notably, all signals pass through the same channel in the DL.

Sparse code multiple access (SCMA) is a non-orthogonal codebook-based multiple-access technique that can provide near optimal spectral efficiency in some implementations. In SCMA, incoming bits are directly mapped to multi-dimensional complex codewords selected from predefined codebook sets. Co-transmitted spread data are carried over superimposed layers. SCMA can be seen as an enhancement of the CDMA spreading/multiplexing scheme LDS-OFDM.

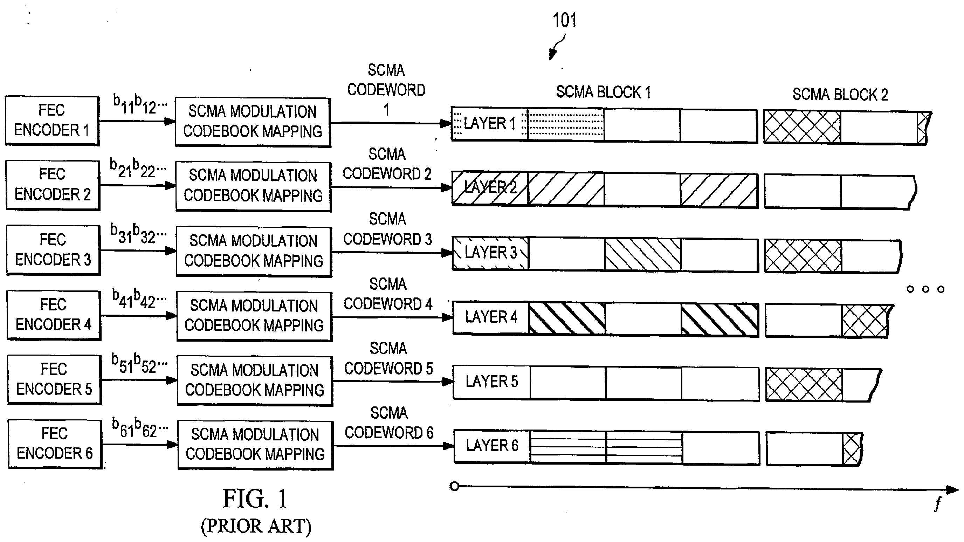

Reference is now made to FIGURE 1 illustrating an example of a SCMA system block diagram. SCMA is developed with non-orthogonal multiplexing of layers. Overloading is employed to increase overall rate and connectivity. Binary domain data are directly encoded to multi-dimensional complex domain codewords with shaping gain and better spectral efficiency. Spreading is employed for robust link-adaptation. Multiple access and user multiplexing is achievable by generating multiple codebooks, one for each layer. Codewords of the codebooks are sparse such that the MPA multi-user detection technique is applicable to detect the multiplexed codewords with a moderate complexity.

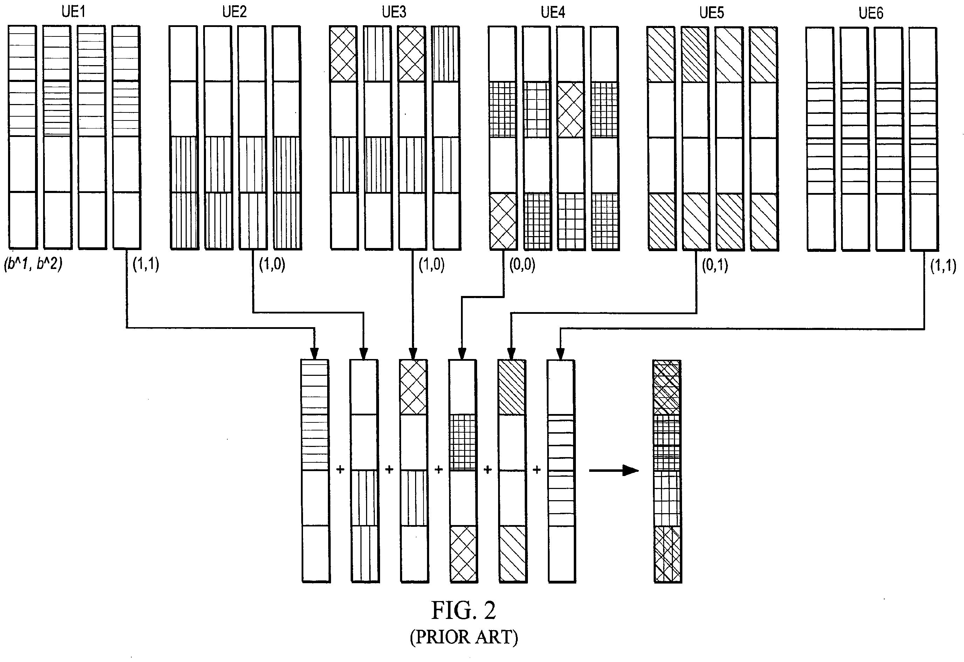

A typical structure of a SCMA code for $J = 6$ layers is illustrated in FIGURE 2. Every layer has its own multi-dimensional codebook with $M = 4$ different codewords, each carrying 2 bits. The length of each codeword is equal to the spreading factor $K = 4$. Sparsity of the codewords can be designed so that all codewords belonging to a codebook follow a unique sparsity pattern different from the other codebooks. In the particular example illustrated in FIGURE 2, every codeword contains 2 nonzero elements out of the $K = 4$ possible places.

When the bits of a layer arrive at a SCMA modulator, the bits are directly mapped by SCMA modulation codebook mapper 101 to a codeword belonging to the corresponding codebook of the layer. As a multiple access code, the SCMA codewords of the multiple layers are multiplexed to form a multiple-access coding scheme as illustrated in FIGURE 2.

An SCMA encoding function (also referred to an SCMA encoder) can be described as $f\colon \mathbb{B}^{\log_2(M)} \longrightarrow \mathcal{X}$

, $\mathbf{x} = f(\mathbf{b})$ where $\mathcal{X} \subset \mathbb{C}^K$ with cardinality $|X| = M$. The $K$-dimensional complex codeword $\mathbf{x}$ is a sparse vector with $N < K$ non-zero entries. Let c denote a $N$-dimensional complex constellation point defined within the constellation set

$$\mathcal{C} \subset \mathbb{C}^N$$

such that

$$\colon \mathbb{B}^{\log_2(M)} \longrightarrow \mathcal{C},$$

$\mathbf{c} = g(\mathbf{b})$. A SCMA encoder can be redefined as $f = \mathbf{V}g$ where the binary mapping matrix $\mathbf{V} \in \mathbb{B}^{K \times N}$ simply maps the $N$ dimensions of a constellation point to a $K$-dimensional SCMA codeword. Note that $\mathbf{V}$ contains $K - N$ all-zero rows. Eliminating the all-zero rows from $\mathbf{V}$, the rest can be represented by identity matrix $\mathbf{I}_N$ meaning that the binary mapper does not permute the dimensions of subspace C during the mapping process.

A SCMA encoder contains $J$ separate layers, each layer can be defined by

$$\mathcal{S}_j\left(\mathbf{V}_j, g_j; M_j, N_j, K\right),$$

, $j = 1, ..., J$. The constellation function $g_j$ generates the constellation set $\mathcal{C}_j$ with $M_j$ alphabets of length $N_j$. The mapping matrix $\mathbf{V}_j$ maps the $N_j$-dimensional constellation points to SCMA codewords to form codeword set $X_j$. Without loss of generality, all layers can be assumed to have the same constellation size and length, i.e. $M_j = M, N_j = N, \forall j$. Summarizing, a SCMA code can be represented by

$$\mathcal{S}\left([\mathbf{V}_j]_{j=1}^{J}, [g_j]_{j=1}^{J}; J, M, N, K\right).$$

SCMA codewords are multiplexed over $K$ shared orthogonal resources (e.g. OFDMA tones or MIMO spatial layers). The received signal after the synchronous layer multiplexing can be expressed as:

$$\mathbf{y} = \sum_{j=1}^{J} \operatorname{diag}(\mathbf{h}_j)\mathbf{x}_j + \mathbf{n} = \sum_{j=1}^{J} \operatorname{diag}(\mathbf{h}_j)\mathbf{V}_j g_j(\mathbf{b}_j) + \mathbf{n}$$

where $\mathbf{x}_j = (x_{1j}, \dots, x_{Kj})^{\mathsf{T}}$ is the SCMA codeword of the layer $j$, $\mathbf{h}_j = (h_{1j}, \dots, h_{Kj})^{\mathsf{T}}$ is the channel vector of layer $j$ and

$$\mathbf{n} \sim \mathcal{CN}(0, N_0 \mathbf{I})$$

is the background noise. In the case that all the layers are transmitted from the same TP, all the channels are identical $\mathbf{h}_j = \mathbf{h}$, $\forall j$ and hence the above equation is reduced to $\mathbf{y} = \operatorname{diag}(\mathbf{h}) \sum_{j=1}^{J} \mathbf{x}_j + \mathbf{n}$. By multiplexing $J$ layers over $K$ resources, the overloading factor of the code is defined as $\lambda := J/K$.

In particular, the received signal at the resource $k$ is $y_k = \sum_{j=1}^{J} h_{kj} x_{kj} + n_k$, $k = 1, \dots, K$. As the codewords $\mathbf{x}_j$'s are sparse, only a few of them collide over the resource k. The set of the resources occupied by the layer $j$ depends on the mapping matrix $\mathbf{V}_j$ and the set is determined by the index of the non-zero elements of the binary indicator vector $\mathbf{f}_j = \operatorname{diag}(\mathbf{V}_j\mathbf{V}_j^{\mathsf{T}})$. The total number of layers contributing to the resources is determined by $\mathbf{d}_f = (d_{f1}, \dots, d_{fK})^{\mathsf{T}} = \sum_{j=1}^{J} \mathbf{f}_j$. The whole structure of SCMA code $\mathcal{S}$ can be represented by a factor graph matrix defined as $\mathbf{F} = (\mathbf{f}_1, \dots, \mathbf{f}_J)$. Layer $j$ and resource $k$ are connected if and only if $(\mathbf{F})_{kj} = 1$. The set of the layer nodes connected to the resource node $k$ is defined as $\mathcal{L}_k = \{j | (\mathbf{F})_{kj} = 1, \forall j\}$ for $\forall k$. Alternatively, the set of the resource nodes connected to the layer node $j$ is $\mathcal{R}_j = \{k | (\mathbf{F})_{kj} = 1, \forall k\}$ for $\forall j$. Based on the factor graph definition, the received signal at the resource k can be rewritten as:

$$y_k = \sum_{j \in \mathcal{L}_k} h_{kj} x_{kj} + n_k, \qquad \forall k.$$

Note that the factor graph parameters $\mathbf{F}$, $[\mathbf{V}_j]_{j=1}^{J}$, $[\mathcal{L}_k]_{k=1}^{K}$, and $[\mathcal{R}_j]_{j=1}^{J}$ all represent the same information but in the different formats.

Table 1 below compares LDS and SCMA. LDS and SCMA are both multiple-access schemes but LDS is in the signature domain whereas SCMA is in the code domain. The advantage of SCMA is the multi-dimensional constellation shaping gain and the coding gain comes out of the codebook multiple-access rather than the simple symbol spreading in LDS. The receiver of SCMA is codeword-based MPA. The codeword-based MPA follows the same principle as the traditional symbol-based MPA already used for LDS. Complexities are identical under the same system parameter setting.

**Table 1**

| Property | | SCMA | | LDS |
|---|---|---|---|---|
| Multiple access | ✓ | Codebook domain | ✓ | Signature domain |
| Sparse | ✓ | Sparse codewords | ✓ | Low density signatures |
| Coding gain | ✓ | Data carried over multi-dimensional complex codewords | x | Data carried over QAM symbols |
| Degree of freedom | | $J$ codebooks each with $M$ codewords | | $J$ signatures |
| Receiver | | Codeword-based MPA | | Symbol-based MPA |

SCMA is described in more detail in U.S. patent application publication US2014/0140360 published May 22, 2014, titled "SYSTEMS AND METHODS FOR SPARSE CODE MULTIPLE ACCESS".

Embodiments of this disclosure provide systems and methods for Multi-User SCMA (MU-SCMA). Unlike MU-MIMO, which is a closed-loop spatial domain multiplexing scheme where gain is limited (especially for vehicular users or systems with limited bandwidth for feedback), MU-SCMA is an open loop multiplexing scheme. MU-SCMA enables multiplexing in code and power domains with no need for full knowledge of CSI. Therefore, MU-SCMA provides throughput gain even for high speed users. In addition, the feedback overhead in MU-SCMA is much less than in MU-MIMO.

The MU-SCMA systems and methods disclosed herein provide open-loop multiplexing with low sensitivity to channel aging and low feedback overhead. The disclosed systems and methods have low sensitivity to user mobility and minimum dependency on the channel knowledge. With minimal knowledge of the channel in terms of average channel quality index, users can be paired to increase the overall throughput of the network and improve users' experience for both pedestrian and vehicular users.

The disclosed embodiments feature code and power domain multiplexing of users over same time-frequency and spatial resources. SCMA layers are allocated to multiple users. In certain embodiments, one or multiple layers might be allocated to a user. The disclosed embodiments provide pairing and power allocation to multiplexed users, based on knowledge of the users such as average quality of user channels (e.g., CQI), average rate of users, a scheduling criterion such as weighted sum-rate, or any other suitable system or user parameters.

The embodiments disclosed herein feature a mechanism for link-adaptation of paired users, which includes MCS (codebook size and code rate) and layer adjustment of paired users based on user parameters, such as allocated power, channel quality, average rate, and the like. Non-linear detection of multiplexed users may include SIC, MPA, and the like. The detection strategy may depend on the quality and rate of the user among the multiplexed user.

The disclosed embodiments also provide a dynamic signaling mechanism to indicate to multiplexed users the following information: number of paired users, index of layers belonging to each user, power allocation factor of each layer (or user), codebook size of each layer (or user), code rate of each layer (or user), or any other dynamic parameters which may help for joint detection at each user. This information may be explicitly or implicitly sent to users. In some embodiments, some parameters are common among multiplexed users, while other parameters might be user specific. In some embodiments, a predefined mapping of parameters or parameter values might be used to limit the overhead of dynamic signaling. For example, the power allocation factor or other control information parameter(s) might be limited to a number of predefined options that are known in advance at both the network (e.g., the base station) and the users. As a particular example, one predefined option (e.g., Option #1) could be mapped to a set of parameters specifying two users, two layers per user, the first two layers for user 1, and a 5 dB power offset between users, where user 2 is allocated more power. Other predefined options (e.g., Option #2, Option #3, etc.) could be associated with other parameters or parameter values. The mapping (or set-up) of the predefined options can be broadcast from network to users using semi-static higher-layer signaling. Once broadcast to the users, the predefined options can be stored in a memory at each user.

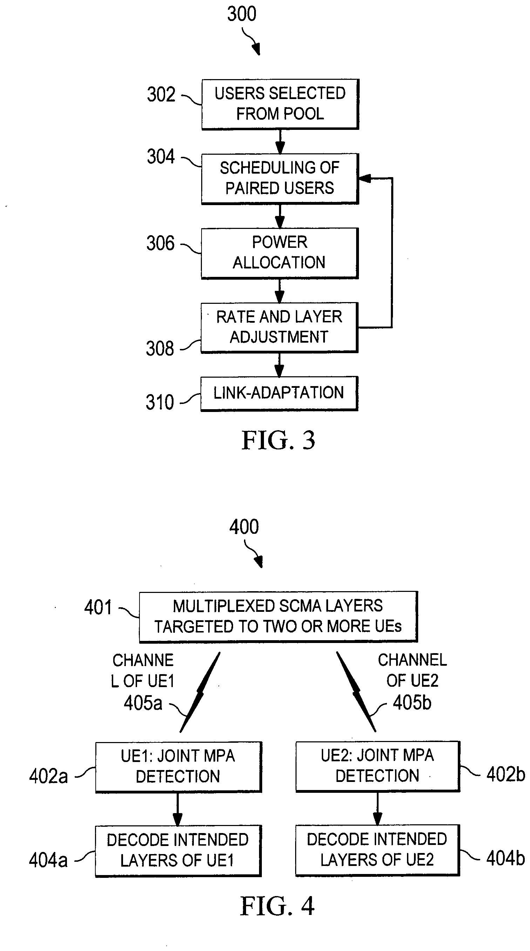

Reference is now made to FIGURE 3, illustrating a flow diagram of the DL transmit algorithms 300 for a MU-SCMA base station transmitter (TP) in accordance with the principles of the present disclosure. The transmitted layers in the MU-SCMA DL belong to more than one user. A user may have more than one layer. Users are selected from a pool of users 302 serviced by the base station. At step 304, users are paired, e.g., using a weighted-sum-rate (WSR) maximization strategy, as described in more detail herein below. The pairing of users may include allocation of the layers to the user pairs. Signals intended for the paired users are transmitted from an antenna with a total power constraint. Therefore, the power is split among paired users according to the channel conditions of the users at step 306, such that a transmission power is assigned to each user. Following the power allocation, the rate of each user, the layer of each user, or both is adjusted at step 308 to compensate the impact of power allocation and to match the target error rate and link quality. Codebook size, coding rate and number of layers are the parameters to adjust the rate of each paired user. Steps 304 - 308 are reiterated until pairing options as well as single-user options are checked to maximize the WSR. At step 310, link adaptation is performed as described in more detail herein below.

A pool of UEs is assumed with an instantaneous post-processing signal to interference plus noise ratio (SINR) $\gamma_u$, $u = 1, \ldots, U$, and average rates $R_u$. Without pairing UEs, based on a proportional fairness scheduling, the best user is picked such that the weighted rate is maximized:

$$u^* = \max_u \frac{r_u}{R_u} \qquad (1)$$

where $r_u$ is determined according to the available Channel Quality Information (CQI), e.g. $r_u = \log_2(1 + \gamma_u)$. In the case of pairing, the target is to pair two or more users over the same time-frequency and space resources such that the weighted sum-rate is maximized. Assuming two users, the WSR is expressed as:

$$u_1^*, u_2^* = \max_{u_1, u_2} \frac{\tilde{r}_{u_1}}{R_{u_1}} + \frac{\tilde{r}_{u_2}}{R_{u_2}} \qquad (2)$$

in which $\tilde{r}_{u_1} = \tilde{r}_{u_1}$ ($u_1$, $u_2$; power sharing ) is the adjusted rate of a user after pairing. Notably, that the adjusted rate depends on both the paired users $u_1$, $u_2$ and the power sharing strategy. As an exhaustive search approach, all $U(U - 1)$ pairing options as well as $U$ single-user options are checked to maximize the WSR in (2) and to pick the best user or paired users to be scheduled. The complexity of the exhaustive scheduling increases in the order of $U^2$, which may not be practically feasible especially for a large size user pool.

A greedy algorithm can be used to reduce the complexity of pairing users. Those skilled in the art will readily recognize that a greedy algorithm is an algorithm that follows the problem solving heuristic of making the locally optimal choice at each stage with the hope of finding a global optimum. In the present case, a first user is picked according to the single-user scheduling criterion of (1) and then the second user is paired with the first selected user with the complexity of order $U - 1$. An example of the greedy scheduling can be summarized as:

Selection of user 1:

$$u_1^* = \max_u \frac{r_u}{R_u} \qquad (3)$$

Selection of user 2:

$$u_2^* = \max_{u \neq u_1^*} \frac{\tilde{r}_{u_1^*}}{R_{u_1^*}} + \frac{\tilde{r}_u}{R_u} \qquad (4)$$

and user 2 is selected only if pairing increases the weighed sum-rate.

This is, the pairing condition is:

$$\frac{\tilde{r}_{u_1^*}}{R_{u_1^*}} + \frac{\tilde{r}_{u_2^*}}{R_{u_2^*}} > \frac{r_{u_1^*}}{R_{u_1^*}}. \qquad (5)$$

Extra requirements may be added to the selection criterion of the second user. For example, a SINR margin $\Delta_{TH} := 10 \log_{10}(\frac{\gamma_1}{\gamma_2})$ may be considered to facilitate the multi-user detection at the receiver side. Different variations of user 2 selection are listed below:

***Pair user 1 with worse users only with a SNR margin***
Selection of user 2:

$$u_2^* = \max_{\substack{u \neq u_1^* \\ 10 \log_{10} \frac{\gamma_1}{\gamma_2} > \Delta_{TH}}} \frac{\tilde{r}_{u_1^*}}{R_{u_1^*}} + \frac{\tilde{r}_u}{R_u}, \qquad (6)$$

***Pair user 1 with better users only with a SNR margin***
Selection of user 2:

$$u_2^* = \max_{\substack{u \neq u_1^* \\ 10 \log_{10} \frac{\gamma_2}{\gamma_1} > \Delta_{TH}}} \frac{\tilde{r}_{u_1^*}}{R_{u_1^*}} + \frac{\tilde{r}_u}{R_u}, \qquad (7)$$

***Pair user 1 with any users with a SNR margin***
Selection of user 2:

$$u_2^* = \max_{\substack{u \neq u_1^* \\ \left|10\log_{10}\frac{\gamma_1}{\gamma_2}\right| > \Delta_{TH}}} \frac{\tilde{r}_{u_1^*}}{R_{u_1^*}} + \frac{\tilde{r}_u}{R_u}. \qquad (8)$$

A DL single input, multiple output (SIMO) OFDMA system with single-user transmission, can be modeled as:

$$\mathbf{y} = \mathbf{h}\sqrt{P}s + \mathbf{n} \qquad (9)$$

where **h** is the SIMO fading channel vector, **n** is Gaussian noise vector with covariance matrix $\mathbf{R}_{nn}$, s is the transmit symbol with unit power, and P is the total transmit power. Assuming $\mathbf{R}_{nn} = N_0\mathbf{I}$, the post-processing SINR of the model with a linear maximal ratio combining (MRC) receiver is expressed as:

$$\gamma = \frac{\|\mathbf{h}\|^2 P}{N_0}. \qquad (10)$$

Two users are assumed with single-user channel qualities $\gamma_1 = \frac{\|\mathbf{h}_1\|^2 P}{N_1} > \gamma_2 = \frac{\|\mathbf{h}_2\|^2 P}{N_2}$ are paired together with after-pairing rates $\tilde{r}_1 > \tilde{r}_2$. The total transmit power P is shared among the users with ratio $P_1 = \alpha P$ and $P_2 = (1 - \alpha)P$ such that the power sharing factor $\alpha \in (0,1.0)$. Let $s_k$ denote the transmit symbol of user k with unit power. The model of received signal at user k is:

$$\mathbf{y}_k = \mathbf{h}_k\sqrt{\alpha P}s_1 + \mathbf{h}_k\sqrt{(1-\alpha)P}s_2 + \mathbf{n}_k. \qquad (11)$$

Rate Adjustment and Detection Strategy for Calculation of $\alpha$

If user 1 is meant to detect its targeted symbol $s_1$ with rate $\tilde{r}_1$ it should be also able to detect $s_2$ with the lower rate $\tilde{r}_2$. A successive interference cancellation (SIC) detector can be adopted to detect $s_1$ and $s_2$ at user 1.
For the sake of calculation, we assume an ideal SIC detection is feasible at user 1, i.e., the lower rate signal of user 2 is first detected and removed to enable the detection of the higher rate signal of user 1. According to equation (11) with $k = 1$, the equivalent SINR for detection of $s_2$ is:

$$\tilde{\gamma}_{2@user\,1} = \frac{\|\mathbf{h}_1\|^2(1-\alpha)P}{\|\mathbf{h}_1\|^2\alpha P + N_1} = \frac{(1-\alpha)\gamma_1}{1+\alpha\gamma_1}. \qquad (12)$$

User 2 is detectable at user 1 only if:

$$F1: \quad \tilde{r}_2 \leq \log_2(1 + \tilde{\gamma}_{2@user\,1}). \qquad (13)$$

If user 2 is detected successfully, it can be removed from the received signal. Simplifying equation (11), the equivalent signal after the co-paired interference cancellation at user 1 is:

$$\tilde{\mathbf{y}}_1 = \mathbf{h}_1\sqrt{\alpha P}s_1 + \mathbf{n}_1. \qquad (14)$$

In this case, user 1 can be detected only if the following condition satisfied:

$$F2: \quad \tilde{r}_1 \leq \log_2(1 + \tilde{\gamma}_1). \tag{15}$$

where:

$$\tilde{\gamma}_1 = \frac{\|\mathbf{h}_1\|^2 \alpha P}{N_1} = \alpha \gamma_1. \tag{16}$$

Referring to FIGURE 4, a block diagram of a MU-SCMA system 400 in accordance with the principles of the present disclosure is illustrated. A TP 401 (e.g., a base station) transmits multiplexed SCMA layers targeted to two or more UEs (e.g. UE1 and UE2). As illustrated, the air interface comprises the channel of UE1 405a and the channel of UE2 405b. UE1 includes a detector to perform joint MPA detection at 402a while UE2 includes a detector to perform joint MPA detection at 402b, such joint MPA detection described hereinabove. UE1 includes a decoder to decode the intended layers of UE1 at 404a while UE2 includes a decoder to decode the intended layers of UE2 at 404b, such decoders described hereinabove.

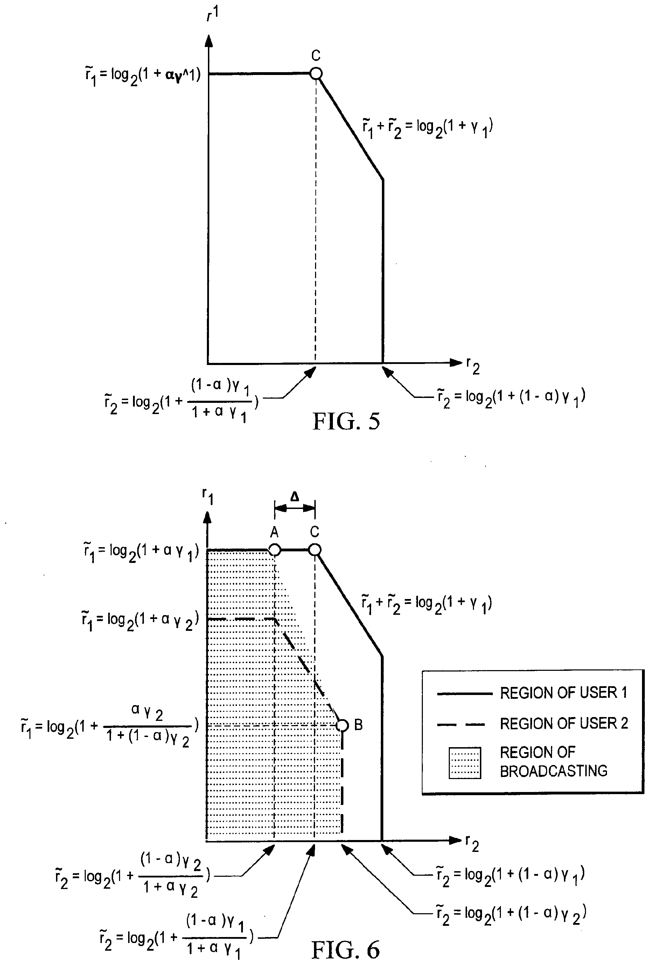

Reference is now made to FIGURE 5 that illustrates the capacity region of joint detection wherein point C represents single-user detection of user equipment (UE2) at user equipment (UE1) and then detection of UE1 after a perfect hard successive interference cancellation (SIC) of UE2. A practical non-linear MIMO receiver implementation known as maximum likelihood (ML) or a maximum likelihood detector (MLD) is fundamentally based on an exhaustive constellation search. The MLD is more demanding on processing than a conventional linear receiver, but can offer significantly higher bit-rates for the same channel conditions. An ideal joint MLD is able to detect $s_1$ and $s_2$ if, on top of the previous rate conditions, the sum-rate is less than the total capacity, i.e.,

$$F3: \quad \tilde{r}_1 + \tilde{r}_2 \leq \log_2(1 + \gamma_1). \tag{17}$$

As user 2 has lower channel quality, it is not able to decode the high rate of user 1. At the same time, user 2 might be decodable at user 1 with single-UE detector as shown at point C of FIGURE 5, but it does not guarantee the successful detection of user 2 at user 2. Assuming user 1 as the co-paired interference to user 2, based on equation (11), the received signal at user 2 can be written as:

$$\mathbf{y}_2 = \mathbf{h}_2 \sqrt{(1 - \alpha)P} s_2 + (\mathbf{h}_2 \sqrt{\alpha P} s_1 + \mathbf{n}_2). \tag{18}$$

The equivalent SINR for single-user detection of $s_2$ is:

$$\tilde{\gamma}_2 = \frac{\|\mathbf{h}_2\|^2 (1 - \alpha)P}{\|\mathbf{h}_2\|^2 \alpha P + N_2} = \frac{(1 - \alpha)\gamma_2}{1 + \alpha \gamma_2}. \tag{19}$$

Signal of user 2 is detectable at user 2 only if:

$$F4: \quad \tilde{r}_2 \leq \log_2(1 + \tilde{\gamma}_2) \tag{20}$$

Reference is now made to FIGURE 6 that illustrates a capacity region needed to guarantee detection of $x_1$ at UE1 and $x_2$ at UE2 for a given power sharing factor $\alpha$ and a detection margin for user 2 of $\Delta$. The shaded region guarantees detection of the UE1 signal at UE1 and the UE2 signal at UE2 while the power sharing factor is $\alpha$.

Theoretically, the best point of transmission is either A or B depending on the weights of user 1 and 2. The WSR at point B is:

$$WSR_B(\alpha) = \frac{\log_2(1 + \frac{\alpha \gamma_2}{1 + (1 - \alpha)\gamma_2})}{R_1} + \frac{\log_2(1 + (1 - \alpha)\gamma_2)}{R_2}. \tag{21}$$

If $R_1 > R_2$, the WSR at B is maximized only if $\alpha = 0$. In this case, the scheduling result falls back to the single user scheduling. Therefore, if the pairing provides better WSR, the only promising scenario of interest would be point A of FIGURE 6.

Assuming the pairing provides gain at point A, the quality of single-user detection of user 2 signal at user 1 is much better than detection of user 2 signal at user 2. It can be shown by comparing $\tilde{\gamma}_{2@user\,1}$ and $\tilde{\gamma}_2$. Referring to (12) (19) and FIGURE 6, the detection margin of user 2 is defined as:

$$\Delta := \frac{\tilde{\gamma}_{2@user\,1}}{\tilde{\gamma}_2} = \frac{\gamma_1}{\gamma_2}\frac{1 + \alpha\gamma_2}{1 + \alpha\gamma_1}. \tag{22}$$

### Channel Quality Indicator (CQI) Adjustment and Power Sharing Optimization of OFDMA

Preferably, the power sharing factor $\alpha$ between the two paired users is optimized. Referring to (16) and (19) which correspond to point A of pairing in FIGURE 6, the single-user CQIs of user 1 and user 2 are preferably adjusted after pairing, such that:

$$\tilde{\gamma}_1 = \alpha\gamma_1 \Rightarrow \tilde{r}_1 = \log_2(1 + \tilde{\gamma}_1), \tag{23}$$

$$\tilde{\gamma}_2 = \frac{(1 - \alpha)\gamma_2}{1 + \alpha\gamma_2} \Rightarrow \tilde{r}_2 = \log_2(1 + \tilde{\gamma}_2). \tag{24}$$

The WSR of the paired users at point A is:

$$WSR_A(\alpha) = \frac{\log_2(1 + \alpha\gamma_1)}{R_1} + \frac{\log_2(1 + \frac{(1 - \alpha)\gamma_2}{1 + \alpha\gamma_2})}{R_2}. \tag{25}$$

The optimum $\alpha$ is the solution of $\frac{\partial WSR_A(\alpha)}{\partial \alpha} = 0$,

$$\left.\frac{\partial WSR_A(\alpha)}{\partial \alpha}\right|_{\alpha=\alpha^*} = \frac{\gamma_1}{R_1(1 + \alpha^*\gamma_1)} - \frac{\gamma_2}{R_2(1 + \alpha^*\gamma_2)} = 0 \Rightarrow \tag{26}$$

$$\alpha^* = \frac{R_1\gamma_2 - R_2\gamma_1}{(R_2 - R_1)\gamma_1\gamma_2} \tag{27}$$

Notably, $\alpha^*$ is a valid solution only if $\alpha^* \in (0,1)$. To facilitate the detection quality, one may limit $\alpha$ to a smaller range.

Referring to (22) and (27), the detection margin of user 2 for optimal $\alpha = \alpha^*$ is reduced to:

$$\Delta = \frac{\gamma_1}{\gamma_2}\frac{1 + \alpha^*\gamma_2}{1 + \alpha^*\gamma_1} = \frac{R_1}{R_2}. \tag{28}$$

This observation shows that with an optimal power allocation, the user 2 detection margin ($\Delta$) is independent of the SINR margin of the paired user ($\Delta_{TH}$). Therefore, to facilitate multi-user detection or hard SIC detection at user 2, one may apply both SINR and detection margin limitations at the time of scheduling.

Even when the detection margin exists, in practice the single-user detection of UE2 at UE1 may fail due to channel error. Under this circumstance, joint ML detection with outer loop may help to improve the detection quality of user 1. If the target of link-adaptation is 10% Block Error Rate (BLER) at both UE1 and UE2, the probability of error for single-user detection of UE2 at UE1 should be much less than 10% (e.g. 1%). Consequently, the joint detector may help for 1% of the time where the single-user detection of UE2 at UE1 fails.

**LDS User Pairing and Power Sharing**

An LDS-OFDM system with a $K \times J$ signature matrix **S** and DL SIMO channel **h** can be modeled as a MIMO transmission system as follows:

$$\mathbf{y} = \sqrt{\frac{P}{J}} \mathbf{Hx} + \mathbf{n} \qquad (29)$$

where **x** is the $J$ dimensional vector of transmit symbols with unit power per vector element, **H** is the MIMO equivalent channel defined as:

$$\mathbf{H} = \mathbf{h} \otimes \mathbf{S} \qquad (30)$$

and $h_n = (\mathbf{h})_n$ is the nth path of the SIMO fading channel and is assumed identical for all $K$ tones of an LDS block. This assumption is approximately valid for the localized resource allocation of a LDS block. Without any limitation, this model can be extended to the distributed allocation of LDS blocks in which every tone of an LDS block experiences different fading channel across time-frequency tones as well as space.

The capacity of an open-loop MIMO system is well-known and can be expressed as:

$$C = \log_2 \det(\mathbf{I} + \frac{P}{J} \mathbf{R}_{nn}^{-1} \mathbf{HH}^{\mathrm{H}}) . \qquad (31)$$

Assuming $\mathbf{R}_{nn} = N_0 \mathbf{I}$, (31) is reduced to:

$$C = \log_2 \det(\mathbf{I} + \frac{P}{N_0 J} \mathbf{HH}^{\mathrm{H}}) . \qquad (32)$$

In matrix theory, Sylvester's determinant theorem is useful for evaluating certain types of determinants. According to Sylvester's determinant theorem, (32) is equivalent to:

$$C = \log_2 \det(\mathbf{I} + \frac{P}{N_0 J} \mathbf{H}^{\mathrm{H}} \mathbf{H}) . \qquad (33)$$

Referring to (30), it can be shown that:

$$\mathbf{H}^{\mathrm{H}} \mathbf{H} = \|\mathbf{h}\|^2 (\mathbf{S}^{\mathrm{H}} \mathbf{S}) \qquad (34)$$

Replacing (34) in (33) results in:

$$C = \log_2 \det \left( \mathbf{I} + \frac{\|\mathbf{h}\|^2 P}{N_0 J} (\mathbf{S}^{\mathrm{H}} \mathbf{S}) \right), \qquad (35)$$

or according to (10):

$$C = \log_2 \det\left(\mathbf{I} + \frac{\gamma}{J}(\mathbf{S}^{\mathrm{H}}\mathbf{S})\right). \tag{36}$$

The capacity formulation $C$ of (36) shows that if a UE simply reports its SIMO equivalent post-processing SINR, the link- and rank-adaptation is possible at the transmit point of a downlink connection as long as the signature matrix is known between transmit and receive points. In the case of OFDMA with $\mathbf{S} = [1]$ and $J = 1$, (36) is simply reduced to OFDMA channel capacity, i.e.

$$C = \log_2(1 + \gamma). \tag{37}$$

**COI Adjustment and Power Sharing Optimization of LDS**

The adjusted rate of the first LDS paired user can be described as:

$$\tilde{r}_1 = \log_2 \det\left(\mathbf{I} + \frac{\alpha\gamma_1}{J_1(\mathbf{S}_1^{\mathrm{H}}\mathbf{S}_1)}\right). \tag{38}$$

where $\mathbf{S}_1$ is the signature matrix of user 1 with $J_1$ signatures. The received signal at user 2 is modeled as:

$$\mathbf{y} = \sqrt{\frac{(1-\alpha)P}{J_2}}\mathbf{H}_2\mathbf{x}_2 + \sqrt{\frac{\alpha P}{J_1}}\mathbf{H}_1\mathbf{x}_1 + \mathbf{n}_2 \tag{39}$$

in which $\mathbf{H}_1 = \mathbf{h}_2 \otimes \mathbf{S}_1$ is the equivalent channel of user 1 at user 2, $\mathbf{H}_2 = \mathbf{h}_2 \otimes \mathbf{S}_2$ is the equivalent channel of user 2 at user 2, and $\mathbf{S}_2$ is the signatures matrix of user 2 with $J_2$ signatures. The noise power of the AWGN noise $\mathbf{n}_2$ is $N_2$, such that $\gamma_2 = \|\mathbf{h}_2\|^2/N_2$. Assuming user 1 is the co-paired interference of user 2, the equivalent interference covariance matrix seen by user 2 is:

$$\mathbf{R}_2 = N_2\mathbf{I} + \frac{\alpha P}{J_1}\mathbf{H}_1\mathbf{H}_1^{\mathrm{H}}. \tag{40}$$

It can be shown that $\mathbf{H}_1\mathbf{H}_1^{\mathrm{H}} = (\mathbf{h}_2\mathbf{h}_2^{\mathrm{H}}) \otimes (\mathbf{S}_1\mathbf{S}_1^{\mathrm{H}})$ meaning that equivalent interference at user 2 is colored even if the background noise in white. For the sake of link-adaptation and rate adjustment, the equivalent interference is approximated with a white noise as below:

$$\mathbf{S}_1\mathbf{S}_1^{\mathrm{H}} \approx J_1\mathbf{I} \tag{41}$$

and

$$\mathbf{h}_2\mathbf{h}_2^{\mathrm{H}} \approx \|\mathbf{h}_2\|^2\mathbf{I} \tag{42}$$

and so,

$$\mathbf{R}_2 \approx (N_2 + \alpha P\|\mathbf{h}_2\|^2)\mathbf{I}. \tag{43}$$

With this approximation, the adjusted rate of second user can be expressed as:

$$\tilde{r}_2 = \log_2 \det\left(\mathbf{I} + \frac{(1-\alpha)P\|\mathbf{h}_2\|^2}{J_2(N_2 + \alpha P\|\mathbf{h}_2\|^2)}\left(\mathbf{S}_2^{\mathbf{H}}\mathbf{S}_2\right)\right), \tag{44}$$

or equivalently,

$$\tilde{r}_2 = \log_2 \det\left(\mathbf{I} + \frac{(1-\alpha)\gamma_2}{\left(J_2(1+\alpha\gamma_2)\right)\left(\mathbf{S}_2^{\mathbf{H}}\mathbf{S}_2\right)}\right). \tag{45}$$

The WSR with weights $w\_i = 1/R\_i$ is:

$$WSR(\alpha) = w_1 \log_2 \det\left(\mathbf{I} + \frac{\alpha\gamma_1}{J_1}\left(\mathbf{S}_1^{\mathbf{H}}\mathbf{S}_1\right)\right) + w_2\log_2 \det\left(\mathbf{I} + \frac{(1-\alpha)\gamma_2}{J_2(1+\alpha\gamma_2)}\left(\mathbf{S}_2^{\mathbf{H}}\mathbf{S}_2\right)\right). \tag{46}$$

The Hermitian matrix $\mathbf{S}^{\mathbf{H}}\mathbf{S}$ can be decomposed to $\mathbf{U}\Lambda\mathbf{U}^{\mathbf{H}}$, and hence:

$$\log_2 \det(\mathbf{I} + \rho\mathbf{S}^{\mathbf{H}}\mathbf{S}) = \log_2 \det(\mathbf{I} + \rho\mathbf{U}\Lambda\mathbf{U}^{\mathbf{H}}) = \log_2 \det(\mathbf{I} + \rho\mathbf{U}^{\mathbf{H}}\mathbf{U}\Lambda)$$
$$= \log_2 \det(\mathbf{I} + \rho\Lambda)$$
$$= \log_2 \prod_i (1 + \rho\lambda_i) = \sum_i \log_2(1 + \rho\lambda_i). \tag{47}$$

According to (47), (46) is rewritten as follows:

$$WSR(\alpha) = w_1 \sum_{i=1}^{\min(K,J_1)} \log_2\left(1 + \frac{\alpha\gamma_1}{J_1}\lambda_{1i}\right)$$
$$+ w_2 \sum_{i=1}^{\min(K,J_2)} \log_2\left(1 + \frac{(1-\alpha)\gamma_2}{J_2(1+\alpha\gamma_2)}\lambda_{2i}\right). \tag{48}$$

The optimum power sharing factor is the solution of $\dfrac{\partial WSR(\alpha)}{\partial \alpha} = 0$,

$$\frac{\partial WSR(\alpha)}{\partial \alpha}\bigg|_{\alpha=\alpha^*} = 0 \implies \tag{49}$$

$$\sum_{i=1}^{\min(K,J_1)} \frac{w_1\gamma_1\lambda_{1i}}{J_1 + \gamma_1\lambda_{1i}\alpha^*} - \sum_{i=1}^{\min(K,J_2)} \frac{w_2\gamma_2\lambda_{2i}(1+\gamma_2)}{(1+\gamma_2\alpha^*)(J_2 + \gamma_2\lambda_{2i} + (J_2 - \lambda_{2i})\gamma_2\alpha^*)} = 0.$$

The solution of the above polynomial is $\alpha^*$ which is only valid if it is real and belongs to the interval $(0, 1.0)$. In the case that more than one solution exists, the one that maximizes the $WSR(\alpha^\wedge{}^*)$ is selected.

In the above formulation, it is assumed that the number of layers does not change after pairing. In practice, the number of layers can be changed according to the power allocation for better link adaptation and spectral efficiency. Power and number of layers can change over each RBG. The above formulation was limited to LDS only. The extension of LDS to SCMA is based on an LDS to SCMA mapping technique which is discussed in more detail hereinbelow.

**Scheduling Methodology for SCMA and LDS**

In OFDMA, resources are scheduled or allocated according to time and frequency, where time and frequency can be considered different "dimensions" for scheduling. In SCMA and LDS, a "layer" may be considered another dimension for the resource scheduling. Using different layers, a UE may have overlap with another UE across its allocated RBG(s). Despite the overlap between multiple UEs on the same RGB, a collision can still be avoided. The tolerance for overlapping provides enhanced flexibility in terms of scheduling and potential pairing gain. However, the cost for this flexibility is the complexity of detecting signals as a UE can have overlap with more than one user across multiple RBGs. To achieve a feasible complexity of detection, a restriction can be imposed so that the UE will only share its allocated RBGs with one other paired UE across the entire allocated RBG. By sharing allocated RBGs with only one other paired UE, extra limitations are added on the scheduling, which may decrease the gain of pairing but at the same time makes the complexity of detection manageable at the UE side.

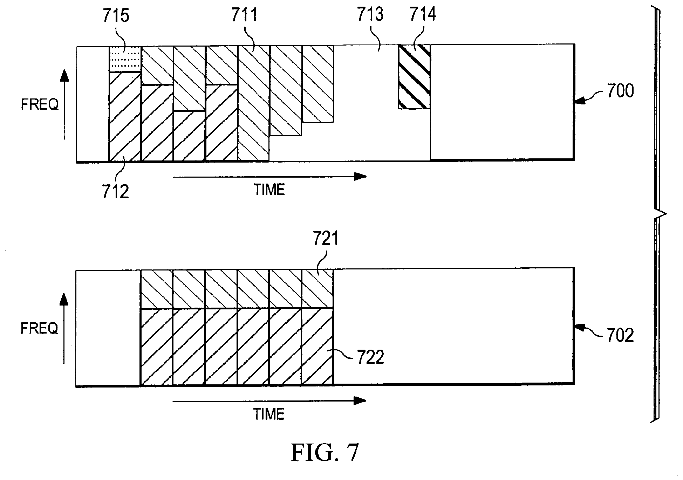

Reference is now made to FIGURE 7, which illustrates pairing with RBG based UE scheduling versus pairing with UE based scheduling. In FIGURE 7, a plurality of available resources 700 are allocated according to RBG based UE scheduling, and a plurality of available resources 702 are allocated according to UE based scheduling. The resources may be allocated to more than one UE. For example, the resources 700 include RBGs 711 for a first UE, RBGs 712 for a second UE, RBGs 713 for a third UE, RBGs 714 for a fourth UE, and RBGs 715 for a fifth UE. The resources 702 include RBGs 721 for the first UE and RBGs 722 for the second UE. In the resources 700, which are allocated according to RBG-based scheduling, the RBGs 711 of the first UE share time slots with the RBGs 712 of the second UE and the RBGs 713 of the third UE. In contrast, in the resources 702, which are allocated according to UE-based scheduling, the RBGs 721 of the first UE share time slots only with the RBGs 722 of the second UE. In RBG-based scheduling, a UE is free to have a different power sharing factor across the assigned RBGs. In UE-based scheduling, the power sharing factor is identical across all assigned RBGs to limit the signaling overhead of transmission.

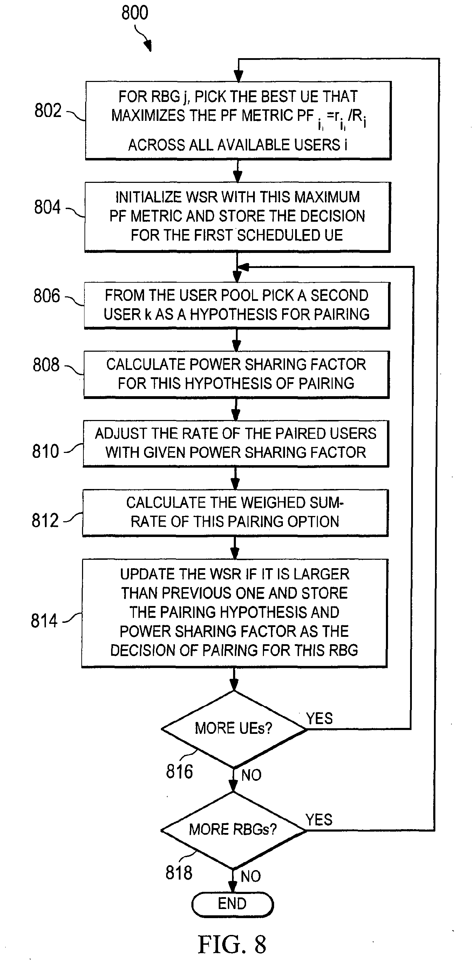

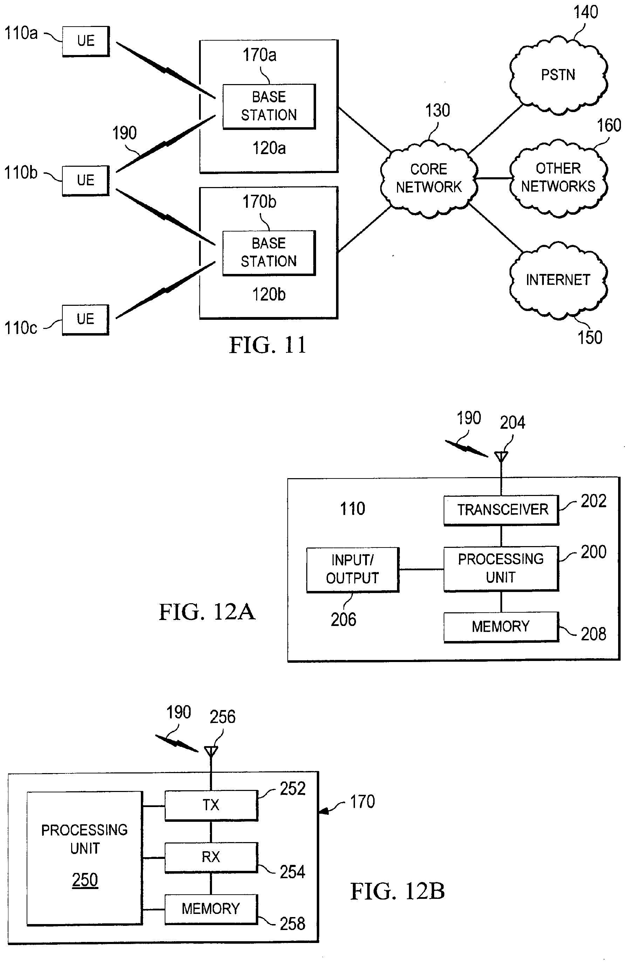

Reference is now made to FIGURE 8, which illustrates a flow diagram of steps for a RBG-based UE pairing scheduler 800. In some embodiments, the scheduler 800 can be part of or performed by one or more base stations 170a depicted in FIGURE 11, described in more detail hereinbelow. In other embodiments, the scheduler 800 can be part of a centralized scheduler (e.g., a "cloud" based scheduler) that serves a plurality of base stations. Proportional fair scheduling maintains a balance between the competing interests of maximizing total throughput while allowing all users at least a minimal level of service. This is done by assigning each data flow a data rate or a scheduling priority that is inversely proportional to its anticipated resource consumption. At step 802, for a given RBG j, the UE is selected that maximizes the proportional fair (PF) metric $PF_{ij}$ across all available users i, wherein $PF_{ij} = r_{ij}/PR_i$. This UE is selected to be the first UE of the UE pair. At step 804, the WSR is initialized with a PF metric, such as the maximum PF metric, and the selection for the first UE of the pair is stored. At step 806, a candidate second UE k is selected from the user pool of UEs serviced by the base station as a candidate for pairing with the first UE. At step 808, the power sharing factor $\alpha$ is calculated for the hypothesis of the pairing in step 806. At step 810, the rate of the paired users is adjusted with the given power sharing factor $\alpha$. At step 812, the WSR is calculated for the pairing of the first UE and the candidate second UE selected in step 806. At step 814, the WSR is updated if it is larger than the previous WSR and the pairing hypothesis and power sharing factor $\alpha$ are stored as the decision of the pairing for the RBG. At step 816, it is determined if there is another UE to be selected as a candidate for pairing with the first UE. If there is another candidate second UE, the candidate second UE is selected and steps 806-814 are repeated for the newly selected candidate second UE. Steps 806-816 are repeated for each candidate second UE in the pool. At step 818, it is determined if there are more RBGs to be processed. If there are more RBGs, the next RBG is selected and steps 802-818 are repeated until all candidate second UEs and RBGs are processed.

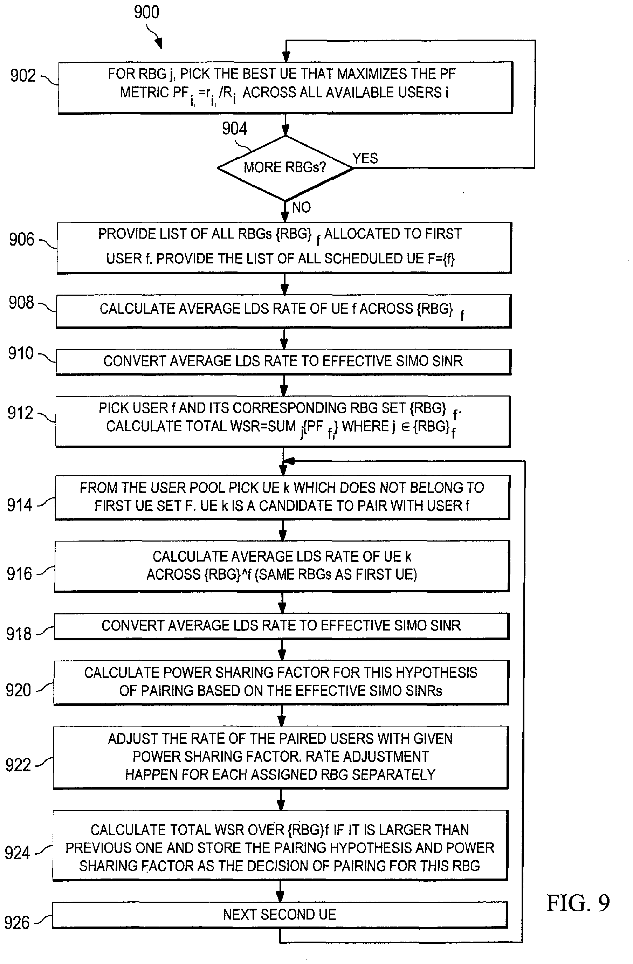

Reference is now made to FIGURE 9 that illustrates a flow diagram of steps for a UE-based UE pairing scheduler 900. The scheduler 900 is part of or performed by one or more base stations 170a depicted in FIGURE 11, described in more detail hereinbelow.

At step 902, for a given RBG j, the UE is selected that maximizes the proportional fair (PF) metric $PF_{ij}$ across all available users i, wherein $PF_{ij} = r_{ij}/PR_i$. At step 904, it is determined whether there are any remaining RBGs to process. If there are remaining RBGs to process, the next RBG is selected and step 902 repeated until all RBGs are processed. At step 906, the scheduler 900 creates a list for all RBGs allocated to a first user f, $\{RBG\}_f$, and a list for all scheduled UEs F={ f} in those RBGs. At step 908, the average LDS rate of UE f across $\{RBG\}_f$ is calculated. At step 910, the average LDS rate is converted to an effective SIMO SINR. In some embodiments, steps 908 and 910 can be combined as a single step in which the effective SIMO SINR value is determined. At step 912, user f and its corresponding RBG set $\{RBG\}_f$ are selected and the total WSR=sum($PF_{fj}$) is calculated, where j∈$\{RBG\}_f$ At step 914, a UE k is picked from the user pool of UEs which does not belong to the first UE set F. The UE k is a candidate to pair with user f. At step 916, the average LDS rate of UE k is calculated across $\{RBG\}_f$ (i.e. the same RBGs as the first UE). At step 918, the average LDS rate is converted into an effective SIMO SINR. At step 920, the power sharing factor $\alpha$ is calculated for the hypothesis of pairing based on the effective SIMO SINRs. At step 922, the rate of the paired users is adjusted with a given power sharing factor $\alpha$. The rate adjustment occurs separately for each assigned RBG. At step 924, the total WSR over $\{RBG\}_f$ is calculated if $\{RBG\}_f$ is larger than the previous one and the pairing hypothesis and the power sharing factor $\alpha$ is stored as the decision of pairing for the RBG. At step 926, the next second UE is processed and steps 902-926 are repeated.

## Signaling Support for MU-SCMA

Additional information may be needed to support MU-SCMA or MU-LDS DL signaling on top of SU-SCMA or SU-LDS. The additional information can be dynamically signaled to the users, and can include one or more of the following: the number of users paired, the number of layers of each user, the index of the layer of each user, the power allocation factor of each layer (or user), the codebook size of each layer (or user), the code rate of each layer (or user), or any other dynamic parameters which may help for joint detection at each user. If the users and layers are in a predefined order, then only the number of layers per user is needed. This information may be explicitly or implicitly sent to users.

Depending on embodiment, the format for signaling the power allocation factor (or simply "power factor") of each user (or layer) can be either absolute or relative. For example, assume that there are four layers (e.g., layer 1 through layer 4) with power allocation factors to be signaled. The signaling can include absolute representation for each layer (e.g., 0.3, 0.1, 0.2, 0.4 (note that 0.3+0.1+0.2+0.4=1.0)). Or the signaling can include relative representation with respect to a reference layer (e.g., if the reference layer is layer 1: N/A, 1/3, 2/3, 4/3). Or the signaling can include relative representation with respect to the previous layer (e.g., N/A, 1/3, 2, 2).

In some embodiments, the power factors can also be limited to a predefined set. Among U users paired, only U-1 power factors may be required. The one remaining power factor (e.g., the U-th power factor) can be calculated since the summation of the square of the power factors equals one (assuming the total transmit power is fixed). For example, the first or last paired user can calculate its power factor from the power factor of other paired users.

In general, the above information is required per RBG, but the signaling overhead can be reduced for RBG-based and UE-based scheduling where layer or power unification are applied. In those cases, the layer or power factor is reported one per user.

## Performance Evaluation and Simulation Results

In a simulation, the following environment was assumed: an ITU-TU channel, 1×2 SIMO, 57 cells, and the speed of the UEs at 3 kilometers/hour. Wideband (WB) scheduling was considered where 1 RBG = 50 RBs, and sub-band (SB) scheduling where 1 RBG = 5 RBs.

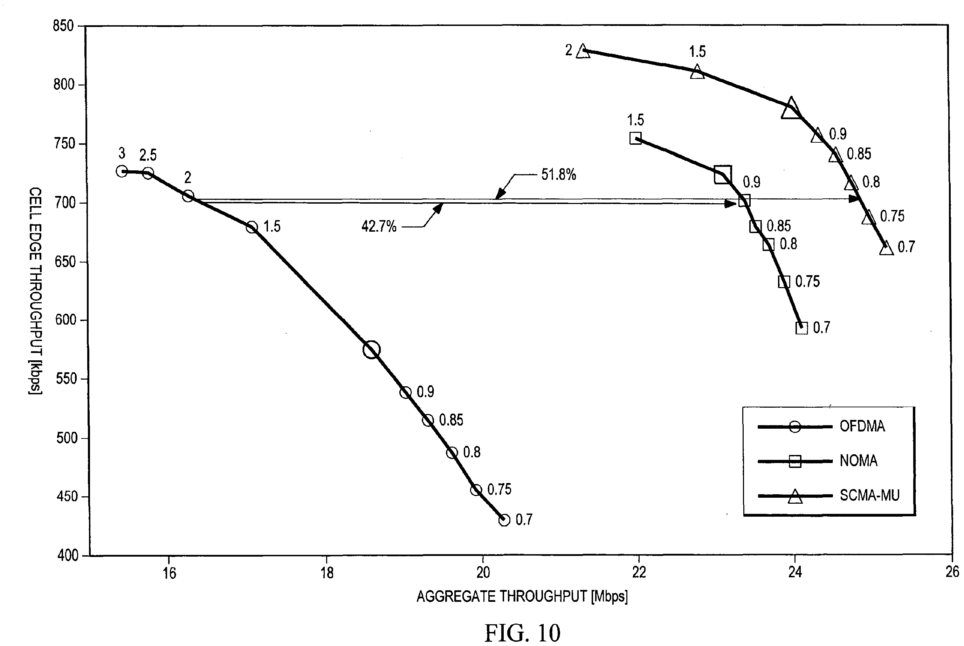

Reference is now made to FIGURE 10 that illustrates an overall comparison of OFDMA, Non-Orthogonal Multiple Access (NOMA), and MU-SCMA with a varying fairness exponent in WB scheduling. By changing the fairness exponent used to compute the PF metric, OFDMA, NOMA, and MU-SCMA schemes were compared at a fixed coverage. For example, when the coverage is 700 kbps, NOMA and MU-SCMA have a 42.7% and 51.8% gain over OFDMA, respectively. At the same coverage, MU-SCMA outperforms NOMA by 6.4%.

Tables 2 and 3 below give additional performance comparison of OFDMA, NOMA, and SCMA in WB and SB scheduling, respectively. Layer adaptation (LA) was included during simulation of SU-SCMA. In the simulation, in both SU and MU cases, SCMA provides a large gain over the baseline of OFDMA. Against NOMA, MU-SCMA's improvement is about 2%-3% and 6%-7% in throughput and coverage, respectively.

**Table 2**

| WB, TU, 570 UEs | Throughput | Coverage | Throughput Gain | Coverage Gain |
|---|---|---|---|---|
| OFDMA | 18.6 | 574.7 | | |
| SU-SCMA | 19.6 | 621.8 | 5.38% | 8.20% |
| NOMA | 23.1 | 723.8 | 24.19% | 25.94% |
| MU-SCMA | 24.0 | 779.7 | 29.03% | 35.67% |

**Table 3**

| SB, TU, 570 UEs | Throughput | Coverage | Throughput Gain | Coverage Gain |
|---|---|---|---|---|
| OFDMA | 23.6 | 872 | | |
| SU-SCMA | 25.0 | 894.4 | 5.93% | 2.57% |
| NOMA | 28.0 | 1054.5 | 18.64% | 20.93% |
| MU-SCMA | 28.7 | 1121.5 | 21.61% | 28.61% |

Layer Adaptation (LA) exploits the fast fading channel of the UE and dynamically adjusts the number of layers transmitted to each UE. LA is especially helpful to UEs with low geometry (e.g., low SNR and channel quality); nearly 30% gain in the coverage was observed. Table 4 illustrates the performance gain from Layer Adaptation (LA).

**Table 4**

| WB, TU, 570 UEs | Throughput | Coverage | Throughput Gain | Coverage Gain |
|---|---|---|---|---|
| SU-SCMA (no LA) | 19.3 | 481.5 | | |
| SCMA-SU + LA | 19.6 | 621.8 | 1.55% | 29.14% |

Table 5 illustrates different pairing strategies. Only SB is presented in Table 5. Both UE-based and RBG-based strategies provide a large gain over OFDMA in both NOMA and MU-SCMA. RBG-based outperforms UE-based as it is more flexible in terms of pairing UEs and sharing transmission power between paired UEs.

**Table 5**

| SB, TU, 570 UEs | Throughput | Coverage | Throughput Gain | Coverage Gain |
|---|---|---|---|---|
| OFDMA | 23.6 | 872.0 | | |
| NOMA UE-based | 27.6 | 991.2 | 16.95% | 13.67% |
| NOMA RBG-based | 28.0 | 1054.5 | 18.64% | 20.93% |
| MU-SCMA UE-based | 27.1 | 1032.8 | 14.83% | 18.44% |
| MU-SCMA RBG-based | 28.7 | 1121.5 | 21.61% | 28.61% |

FIGURE 11 illustrates an example communication system 100 in which principles of the present disclosure may be practiced. In general, the system 100 enables multiple wireless users to transmit and receive data and other content. The system 100 may implement one or more channel access methods, such as code division multiple access (CDMA), time division multiple access (TDMA), frequency division multiple access (FDMA), orthogonal FDMA (OFDMA), single-carrier FDMA (SC-FDMA), low density signature (LDS) and sparse code multiple access (SCMA).

In this example, the communication system 100 includes user equipment (UE) 110a-110c, radio access networks (RANs) 120a-120b, a core network 130, a public switched telephone network (PSTN) 140, the Internet 150, and other networks 160. While certain numbers of these components or elements are shown in FIGURE 11, any number of these components or elements may be included in the system 100.

The UEs 110a-110c are configured to operate or communicate in the system 100. For example, the UEs 110a-110c are configured to transmit or receive wireless signals or wired signals. Each UE 110a-110c represents any suitable end user device and may include such devices (or may be referred to) as a user equipment/device (UE), wireless transmit/receive unit (WTRU), mobile station, fixed or mobile subscriber unit, pager, cellular telephone, personal digital assistant (PDA), smartphone, laptop, computer, touchpad, wireless sensor, or consumer electronics device.

The RANs 120a-120b here include base stations 170a-170b, respectively. Each base station 170a-170b is configured to wirelessly interface with one or more of the UEs 110a-110c to enable access to the core network 130, the PSTN 140, the Internet 150, or the other networks 160. For example, the base stations 170a-170b may include (or be) one or more of several well-known devices, such as a base transceiver station (BTS), a Node-B (NodeB), an evolved NodeB (eNodeB), a Home NodeB, a Home eNodeB, a site controller, an access point (AP), or a wireless router, or a server, router, switch, or other processing entity with a wired or wireless network.

In the embodiment shown in FIGURE 11, the base station 170a forms part of the RAN 120a, which may include other base stations, elements, or devices. Also, the base station 170b forms part of the RAN 120b, which may include other base stations, elements, or devices. Each base station 170a-170b operates to transmit or receive wireless signals within a particular geographic region or area, sometimes referred to as a "cell." In some embodiments, multiple-input multiple-output (MIMO) technology may be employed having multiple transceivers for each cell.

The base stations 170a-170b communicate with one or more of the UEs 110a-110c over one or more air interfaces 190 using wireless communication links. The air interfaces 190 may utilize any suitable radio access technology.

It is contemplated that the system 100 may use multiple channel access functionality, including such schemes as described above. In particular embodiments, the base stations and UEs implement LTE, LTE-A, or LTE-B. Of course, other multiple access schemes and wireless protocols may be utilized.

The RANs 120a-120b are in communication with the core network 130 to provide the UEs 110a-110c with voice, data, application, Voice over Internet Protocol (VoIP), or other services. Understandably, the RANs 120a-120b or the core network 130 may be in direct or indirect communication with one or more other RANs (not shown). The core network 130 may also serve as a gateway access for other networks (such as PSTN 140, Internet 150, and other networks 160). In addition, some or all of the UEs 110a-110c may include functionality for communicating with different wireless networks over different wireless links using different wireless technologies or protocols.

Although FIGURE 11 illustrates one example of a communication system, various changes may be made to FIGURE 11. For example, the communication system 100 could include any number of UEs, base stations, networks, or other components in any suitable configuration, and can further include the UE pairing schedulers and layer adaptation schemes illustrated in any of the figures herein. FIGURES 12A and 12B illustrate example devices that may implement the methods and teachings according to this disclosure. In particular, FIGURE 12A illustrates an example UE 110, and FIGURE 12B illustrates an example base station 170. These components could be used in the system 400 or in any other suitable system.

As shown in FIGURE 12A, the UE 110 includes at least one processing unit 200. The processing unit 200 implements various processing operations of the UE 110. For example, the processing unit 200 could perform signal coding, data processing, power control, input/output processing, or any other functionality enabling the UE 110 to operate in the system 400. The processing unit 200 also supports the methods and teachings described in more detail above. Each processing unit 200 includes any suitable processing or computing device configured to perform one or more operations. Each processing unit 200 could, for example, include a microprocessor, microcontroller, digital signal processor, field programmable gate array, or application specific integrated circuit.

The UE 110 also includes at least one transceiver 202. The transceiver 202 is configured to modulate data or other content for transmission by at least one antenna 204. The transceiver 202 is also configured to demodulate data or other content received by the at least one antenna 204. Each transceiver 202 includes any suitable structure for generating signals for wireless transmission or processing signals received wirelessly. Each antenna 204 includes any suitable structure for transmitting or receiving wireless signals. One or multiple transceivers 202 could be used in the UE 110, and one or multiple antennas 204 could be used in the UE 110. Although shown as a single functional unit, a transceiver 202 could also be implemented using at least one transmitter and at least one separate receiver.

The UE 110 further includes one or more input/output devices 206. The input/output devices 206 facilitate interaction with a user. Each input/output device 206 includes any suitable structure for providing information to or receiving information from a user, such as a speaker, microphone, keypad, keyboard, display, or touch screen.

In addition, the UE 110 includes at least one memory 208.. The memory 208 stores instructions and data used, generated, or collected by the UE 110. For example, the memory 208 could store software or firmware instructions executed by the processing unit(s) 200 and data used to reduce or eliminate interference in incoming signals. Each memory 208 includes any suitable volatile or non-volatile storage and retrieval device(s). Any suitable type of memory may be used, such as random access memory (RAM), read only memory (ROM), hard disk, optical disc, subscriber identity module (SIM) card, memory stick, secure digital (SD) memory card, and the like.

As shown in FIGURE 12B, the base station 170 includes at least one processing unit 250, at least one transmitter 252, at least one receiver 254, one or more antennas 256, and at least one memory 258. The processing unit 250 implements various processing operations of the base station 170, such as signal coding, data processing, power control, input/output processing, or any other functionality. The processing unit 250 can also support the methods and teachings described in more detail above. Each processing unit 250 includes any suitable processing or computing device configured to perform one or more operations. Each processing unit 250 could, for example, include a microprocessor, microcontroller, digital signal processor, field programmable gate array, or application specific integrated circuit.

Each transmitter 252 includes any suitable structure for generating signals for wireless transmission to one or more UEs or other devices. Each receiver 254 includes any suitable structure for processing signals received wirelessly from one or more UEs or other devices. Although shown as separate components, at least one transmitter 252 and at least one receiver 254 could be combined into a transceiver. Each antenna 256 includes any suitable structure for transmitting or receiving wireless signals. While a common antenna 256 is shown here as being coupled to both the transmitter 252 and the receiver 254, one or more antennas 256 could be coupled to the transmitter(s) 252, and one or more separate antennas 256 could be coupled to the receiver(s) 254. Each memory 258 includes any suitable volatile or non-volatile storage and retrieval device(s).

Additional details regarding UEs 110 and base stations 170 are known to those of skill in the art. As such, these details are omitted here for clarity.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the scope of this disclosure, as defined by the following claims.

**Claims**

1. A method (300) of transmitting sparse code multiple access, SCMA, encoded data in a multi-access communication system having a plurality of J multiplexed layers and a plurality of mobile devices, the method being performed by a base station, and the method comprising the steps of:

   • for each resource block group, RBG, among multiple RBGs:

      o determining (step 304), as a part of a scheduling of the plurality of mobile devices, one pair of mobile devices among the plurality of mobile devices as the one pair of mobile devices to which the SCMA encoded data are sent on the RGB by the base station to those mobile devices forming the one pair of mobile device, wherein the two mobile devices forming the one pair of mobile devices share the time-frequency resources of the RBG and share same space resources for the data transmission from the base station to the mobile devices forming the one pair of mobile devices, wherein the determination of the one pair is done such that a weighted sum-rate of the data transmission on the RBG from the base station to the mobile devices forming the one pair of mobile devices is maximized according to the following formula:

$$u_1^*, u_2^* = \max_{u_1, u_2} \frac{\tilde{r}_{u_1}}{R_{u_1}} + \frac{\tilde{r}_{u_2}}{R_{u_2}},$$

      wherein $\tilde{r}_{u_1}$ is an adjusted rate of a first mobile device $u_1$ after a pairing with a second mobile device $u_2$ and depends on a transmission power sharing of the total transmission power of the base station between the first mobile device $u_1$ and the second mobile device $u_2$ after the pairing, $\tilde{r}_{u_2}$ is an adjusted rate of the second mobile device $u_2$ after the pairing and depends on the transmission power sharing of the total transmission power of the base station between the first mobile device $u_1$ and the second mobile device $u_2$ after the pairing, $R_{u_1}$ is an average rate of the first mobile device $u_1$ and $R_{u_2}$ is an average rate of the second mobile device $u_2$, and $u_1^*$ is a first mobile device of the determined pair of mobile devices and $u_2^*$ is a second mobile device of the determined pair of mobile devices; and
      o allocating, as a further part of the scheduling, one or more of the plurality of multiplexed layers to each of the mobile devices of the one determined pair of mobile devices, wherein a *j-th* layer among the plurality of multiplexed layers is defined by

$$S_j(\mathbf{V}_j, g_j; M_j, N_j, K),$$

      $j = 1, \ldots, J$, wherein the constellation function $g_j$ generates a constellation set $\mathcal{C}_j$ with $M_j$ alphabets of length $N_j$, wherein the mapping matrix $\mathbf{V}j$ maps the $N_j$-dimensional constellation points to SCMA codewords to form a codeword set $X_j$, wherein $K$ indicates a number of orthogonal resources over which the SCMA codewords are spread;

   • allocating (step 306) transmission power of the base station to each mobile device in each determined pair according to the channel conditions between the base station and the mobile devices in the corresponding determined pair, such that the total transmission power of the base station is shared among the plurality of multiplexed layers;
• adjusting a rate (step 308) of at least one mobile device in the pairs of mobile devices according to a power of the at least one mobile device;
• transmitting on the corresponding RBGs among the multiple RBGs the SCMA encoded data to the pairs of mobile devices in accordance with the plurality of multiplexed layers, the space resources, the allocated transmission power, and the adjusted rate.

2. The method (300) of claim 1, wherein the allocation of the transmission power (306) comprises calculating the transmission power to optimize the scheduling of the pairs of mobile devices.

3. The method (300) of any one of claims 1 to 2, wherein the rate of each of the plurality of mobile devices is adjusted according to at least one of:

   a SCMA codebook size, and
   a coding rate.

4. The method (300) of any one of claims 1 to 3, wherein a greedy algorithm is used to reduce complexity in scheduling the pairs of mobile devices.

5. The method (300) of any one of claims 1 to 3, wherein the pairs of mobile devices are scheduled using at least one of a Resource Block Group, RBG, pairing technique and a mobile device pairing technique.

6. A base station (170) comprising:

   o at least one memory (258); and
   ◦ at least one processor (250) coupled to the at least one memory, the at least one memory (258) having stored thereon a computer program, the computer program comprising instructions that, when executed by the at least one processor (250), cause the base station (170) to perform any of the methods according to claims 1-5.

**Patentansprüche**

1. Verfahren (300) zum Übertragen von "Sparse Code"-Mehrfachzugang, SCMA, codierten Daten in einem Mehrfachzugangskommunikationssystem mit einer Vielzahl von J gemultiplexten Schichten und einer Vielzahl von Mobilgeräten, wobei das Verfahren durch eine Basisstation durchgeführt wird und das Verfahren die Schritte umfasst:

   • für jede Ressourcenblockgruppe, RBG, innerhalb mehrerer RBGs:

   ○ als Teil eines Zeitplanens der Vielzahl von Mobilgeräten Bestimmen (Schritt 304) von einem Paar von Mobilgeräten innerhalb der Vielzahl von Mobilgeräten als das eine Paar der Mobilgeräte, an das die SCMA-codierten Daten auf der RBG seitens der Basisstation zu jenen Mobilgeräten gesendet werden, die das eine Paar der Mobilgeräte bilden, wobei die beiden Mobilgeräte, die das eine Paar der Mobilgeräte bilden, die Zeit-Frequenz-Ressourcen der RBG gemeinsam nutzen und dieselben Raumressourcen für die Datenübertragung von der Basisstation zu den Mobilgeräten, die das eine Paar der Mobilgeräte bilden, gemeinsam nutzen, wobei die Bestimmung des einen Paares so erfolgt, dass eine gewichtete Summenrate der Datenübertragung auf der RBG von der Basisstation zu den Mobilgeräten, die das eine Paar der Mobilgeräte bilden, gemäß der folgenden Formel maximiert wird:

$$u_1^{\star}, u_2^{\star} = \max_{u_1, u_2} \frac{\tilde{r}_{u_1}}{R_{u_1}} + \frac{\tilde{r}_{u_2}}{R_{u_2}},$$

   wobei $\tilde{r}_{u_1}$ eine angepasste Rate eines ersten Mobilgeräts $u_1$ nach einer Paarung mit einem zweiten Mobilgerät $u_2$ ist und von einer Übertragungsleistungsteilung der gesamten Übertragungsleistung der Basisstation zwischen dem ersten Mobilgerät $u_1$ und dem zweiten Mobilgerät $u_2$ nach der Paarung abhängt, $\tilde{r}_{u_2}$ eine angepasste Rate des zweiten Mobilgeräts $u_2$ nach der Paarung ist und von der Übertragungsleistungsteilung der gesamten Sendeleistung der Basisstation zwischen dem ersten Mobilgerät $u_1$ und dem zweiten Mobilgerät $u_2$ nach der Paarung abhängt, $R_{u1}$ eine durchschnittliche Rate des ersten Mobilgeräts $u_1$ ist, und $R_{u2}$ eine durchschnittliche Rate des zweiten Mobilgeräts $u_2$ ist, und $u_1^*$ ein erstes Mobilgerät des bestimmten Paares von Mobilgeräten ist und $u_2^*$ ein zweites Mobilgerät des bestimmten Paares von Mobilgeräten ist; und

○ als weiterer Teil des Zeitplanens Zuweisen von einem oder mehreren von der Vielzahl der gemultiplexten Schichten an jedes der Mobilgeräte des einen bestimmten Paares von Mobilgeräten, wobei eine $j$. Schicht innerhalb der Vielzahl der gemultiplexten Schichten definiert ist durch

$$S_j\left(\mathbf{V}_j, g_j; M_j, N_j, K\right),$$

$j = 1, \dots, J$, wobei die Konstellationsfunktion $g_j$ einen Konstellationssatz $\mathcal{C}_j$ mit $M_j$ Alphabeten der Länge $N_j$ generiert, wobei die "Mapping"-Matrix $\mathbf{V}j$ die $N_j$-dimensionalen Konstellationspunkte auf SCMA-Codeworte mappt, um einen Codewortsatz $x_j$ zu bilden, wobei $K$ eine Anzahl von orthogonalen Ressourcen angibt, über die die SCMA-Codeworte gespreizt werden;

• Zuweisen (Schritt 306) von Übertragungsleistung der Basisstation zu jedem Mobilgerät in jedem bestimmten Paar gemäß den Kanalbedingungen zwischen der Basisstation und den Mobilgeräten in dem entsprechenden bestimmten Paar, so dass die gesamte Übertragungsleistung der Basisstation innerhalb der Vielzahl der gemultiplexten Schichten geteilt (gemeinsam genutzt) wird;

• Anpassen einer Rate (Schritt 308) von mindestens einem Mobilgerät in den Paaren der Mobilgeräte gemäß einer Leistung des mindestens einen Mobilgeräts;

• Übertragen der SMCA-codierten Daten an die Paare der Mobilgeräte gemäß der Vielzahl der gemultiplexten Schichten, der Raumressourcen, der zugewiesenen Übertragungsleistung und der angepassten Rate auf den entsprechenden RBGs innerhalb der mehreren RBGs.

2. Verfahren (300) nach Anspruch 1, wobei die Zuweisung der Übertragungsleistung (306) Berechnen der Übertragungsleistung umfasst, um das Zeitplanen der Paare von Mobilgeräten zu optimieren.

3. Verfahren (300) nach einem der Ansprüche 1 bis 2, wobei die Rate von jedem von der Vielzahl der Mobilgeräte angepasst wird nach mindestens einer von:

einer SCMA-Codebuchgröße, und
einer Codierrate.

4. Verfahren (300) nach einem der Ansprüche 1 bis 3, wobei ein "Greedy"-Algorithmus verwendet wird, um die Komplexität in der Zeitplanung der Paare von Mobilgeräten zu reduzieren.

5. Verfahren (300) nach einem der Ansprüche 1 bis 3, wobei die Paare von Mobilgeräten unter Verwendung von mindestens einer von einer Ressourcenblockgruppe, RBG, Paarungstechnik und einer Mobilgerätpaarungstechnik zeitgeplant werden.

6. Basisstation (170), umfassend:

○ mindestens einen Speicher (258); und
○ mindestens einen Prozessor (250), der an den mindestens einen Speicher gekoppelt ist, wobei der mindestens eine Speicher (258) ein Computerprogramm darauf gespeichert hat, wobei das Computerprogramm Anweisungen umfasst, die bei Ausführung durch den mindestens einen Prozessor (250) bewirken, dass die Basisstation (170) eines der Verfahren gemäß den Ansprüchen 1 bis 5 ausführt.

**Revendications**

1. Procédé (300) de transmission de données codées multi-accès en code épars, SCMA, dans un système de communication multi-accès ayant une pluralité de couches multiplexées J et une pluralité de dispositifs mobiles, le procédé étant réalisé par une station de base, et le procédé comprenant les étapes de :

   • pour chaque groupe de blocs de ressources, RBG, parmi de multiples RBG :

      la détermination (étape 304), comme faisant partie d'un ordonnancement de la pluralité de dispositifs mobiles, d'une paire de dispositifs mobiles parmi la pluralité de dispositifs mobiles en tant que paire de dispositifs mobiles à laquelle les données codées SCMA sont envoyées sur le RGB par la station de base à ces dispositifs mobiles formant la paire de dispositifs mobiles, les deux dispositifs mobiles qui forment la paire de dispositifs mobiles partageant les ressources temps-fréquence du RBG et partageant les mêmes ressources d'espace pour la transmission de données de la station de base aux dispositifs mobiles qui forment la paire de dispositifs mobiles, la détermination de la paire étant effectuée de telle sorte qu'un débit de somme pondérée de la transmission de données sur le RBG de la station de base aux dispositifs mobiles formant la paire de dispositifs mobiles est maximisé selon la formule suivante :

$$ u_1^*, u_2^* = \max_{u_1, u_2} \frac{\tilde{r}_{u_1}}{R_{u_1}} + \frac{\tilde{r}_{u_2}}{R_{u_2}}, $$

      $\tilde{r}_{u_1}$ étant un débit ajusté d'un premier dispositif mobile $u_1$ après un appariement avec un second dispositif mobile $u_2$ et dépendant d'un partage de la puissance d'émission de la puissance d'émission totale de la station de base entre le premier dispositif mobile $u_1$ et le second dispositif mobile $u_2$ après l'appariement, $\tilde{r}_{u_2}$ étant un débit ajusté du second dispositif mobile $u_2$ après l'appariement et dépendant du partage de la puissance de transmission de la puissance de transmission totale de la station de base entre le premier dispositif mobile $u_1$ et le second dispositif mobile $u_2$ après l'appariement, $R_{u_1}$ étant un débit moyen du premier dispositif mobile $u_1$ et $R_{u_2}$ étant un débit moyen du second dispositif mobile $u_2$, et $u_1^*$ étant un premier dispositif mobile de la paire déterminée de dispositifs mobiles et $u_2^*$ étant un second dispositif mobile de la paire déterminée de dispositifs mobiles ; et
      l'attribution, comme une partie supplémentaire de l'ordonnancement, d'une ou de plusieurs couches multiplexées parmi la pluralité de couches multiplexées à chacun des dispositifs mobiles de la paire déterminée de dispositifs mobiles, une j-ième couche parmi la pluralité de couches multiplexées étant définie par $S_j(V_j, g_j ; M_j, N_j, K), j = 1, ...J,$ la fonction de constellation $g_j$ générant un ensemble de constellations $C_j$ avec $M_j$ alphabets de longueur $N_j$, la matrice de mise en correspondance $V_j$ mettant en correspondance les points de constellation à $N_j$ dimensions avec des mots codés SCMA pour former un ensemble de mots codés $X_j$, $K$ indiquant un nombre de ressources orthogonales sur lesquelles les mots codés SCMA sont étalés ;

   • l'attribution (étape 306) de la puissance de transmission de la station de base à chaque dispositif mobile dans chaque paire déterminée en fonction des conditions de canal entre la station de base et les dispositifs mobiles dans la paire déterminée correspondante, de sorte que la puissance de transmission totale de la station de base soit partagée entre la pluralité de couches multiplexées ;
   • l'ajustement d'un débit (étape 308) d'au moins un dispositif mobile dans les paires de dispositifs mobiles en fonction d'une puissance de l'au moins un dispositif mobile ;
   • la transmission sur les RBG correspondants parmi les multiples RBG des données codées SCMA aux paires de dispositifs mobiles conformément à la pluralité de couches multiplexées, aux ressources spatiales, à la puissance de transmission allouée et au débit ajusté.

2. Procédé (300) selon la revendication 1, l'attribution de la puissance de transmission (306) comprenant le calcul de la puissance de transmission pour optimiser l'ordonnancement des paires de dispositifs mobiles.

3. Procédé (300) selon l'une quelconque des revendications 1 à 2, le débit de chacun de la pluralité de dispositifs mobiles étant ajusté en fonction d'au moins l'un des éléments suivants : une taille de livre de codes SCMA et un taux de codage.

4.  Procédé (300) selon l'une quelconque des revendications 1 à 3, un algorithme glouton étant utilisé pour réduire la complexité de l'ordonnancement des paires de dispositifs mobiles.

5.  Procédé (300) selon l'une quelconque des revendications 1 à 3, les paires de dispositifs mobiles étant programmées à l'aide d'au moins l'une d'une technique d'appariement de groupe de blocs de ressources, RBG, et d'une technique d'appariement de dispositifs mobiles.

6.  Station de base (170) comprenant :

    au moins une mémoire (258) ; et
    au moins un processeur (250) couplé à l'au moins une mémoire, l'au moins une mémoire (258) ayant stocké sur celle-ci un programme informatique, le programme informatique comprenant des instructions qui, lorsqu'elles sont exécutées par l'au moins un processeur (250), amènent la station de base (170) à réaliser l'un quelconque des procédés selon les revendications 1 à 5.

FIG. 1
(PRIOR ART)

EP 3 130 190 B1

FIG. 2
(PRIOR ART)

300

302 — USERS SELECTED FROM POOL

304 — SCHEDULING OF PAIRED USERS

306 — POWER ALLOCATION

308 — RATE AND LAYER ADJUSTMENT

310 — LINK-ADAPTATION

## FIG. 3

400

401 — MULTIPLEXED SCMA LAYERS TARGETED TO TWO OR MORE UEs

CHANNEL OF UE1
405a

CHANNEL OF UE2
405b

402a — UE1: JOINT MPA DETECTION

UE2: JOINT MPA DETECTION — 402b

404a — DECODE INTENDED LAYERS OF UE1

DECODE INTENDED LAYERS OF UE2 — 404b

## FIG. 4

$\tilde{r}_1 = \log_2(1 + \alpha \gamma^\wedge 1)$

C

$\tilde{r}_1 + \tilde{r}_2 = \log_2(1 + \gamma_1)$

$r_2$

$\tilde{r}_2 = \log_2(1 + \dfrac{(1-\alpha)\gamma_1}{1+\alpha\gamma_1})$

$\tilde{r}_2 = \log_2(1 + (1-\alpha)\gamma_1)$

## FIG. 5

$\Delta$

A    C

$\tilde{r}_1 = \log_2(1 + \alpha\gamma_1)$

$\tilde{r}_1 + \tilde{r}_2 = \log_2(1 + \gamma_1)$

$\tilde{r}_1 = \log_2(1 + \alpha\gamma_2)$

$\tilde{r}_1 = \log_2(1 + \dfrac{\alpha\gamma_2}{1+(1-\alpha)\gamma_2})$

B

——— REGION OF USER 1

– – – REGION OF USER 2

REGION OF BROADCASTING

$r_2$

$\tilde{r}_2 = \log_2(1 + \dfrac{(1-\alpha)\gamma_2}{1+\alpha\gamma_2})$

$\tilde{r}_2 = \log_2(1 + (1-\alpha)\gamma_1)$

$\tilde{r}_2 = \log_2(1 + \dfrac{(1-\alpha)\gamma_1}{1+\alpha\gamma_1})$

$\tilde{r}_2 = \log_2(1 + (1-\alpha)\gamma_2)$

## FIG. 6

FIG. 7

800

802 ⟶ FOR RBG j, PICK THE BEST UE THAT MAXIMIZES THE PF METRIC $PF_{i_j} = r_{i_j}/R_i$ ACROSS ALL AVAILABLE USERS i

804 ⟶ INITIALIZE WSR WITH THIS MAXIMUM PF METRIC AND STORE THE DECISION FOR THE FIRST SCHEDULED UE

806 ⟶ FROM THE USER POOL PICK A SECOND USER k AS A HYPOTHESIS FOR PAIRING

808 ⟶ CALCULATE POWER SHARING FACTOR FOR THIS HYPOTHESIS OF PAIRING

810 ⟶ ADJUST THE RATE OF THE PAIRED USERS WITH GIVEN POWER SHARING FACTOR

812 ⟶ CALCULATE THE WEIGHED SUM-RATE OF THIS PAIRING OPTION

814 ⟶ UPDATE THE WSR IF IT IS LARGER THAN PREVIOUS ONE AND STORE THE PAIRING HYPOTHESIS AND POWER SHARING FACTOR AS THE DECISION OF PAIRING FOR THIS RBG

816 — MORE UEs? — YES

NO

818 — MORE RBGs? — YES

NO

END

FIG. 8

900

902 — FOR RBG j, PICK THE BEST UE THAT MAXIMIZES THE PF METRIC $PF_{i,} = r_{i,}/R_i$ ACROSS ALL AVAILABLE USERS i

904 — MORE RBGs? — YES

NO

906 — PROVIDE LIST OF ALL RBGs $\{RBG\}_f$ ALLOCATED TO FIRST USER f. PROVIDE THE LIST OF ALL SCHEDULED UE F={f}

908 — CALCULATE AVERAGE LDS RATE OF UE f ACROSS $\{RBG\}_f$

910 — CONVERT AVERAGE LDS RATE TO EFFECTIVE SIMO SINR

912 — PICK USER f AND ITS CORRESPONDING RBG SET $\{RBG\}_f$. CALCULATE TOTAL WSR=SUM $_j\{PF_{f_j}\}$ WHERE j ∈ $\{RBG\}_f$

914 — FROM THE USER POOL PICK UE k WHICH DOES NOT BELONG TO FIRST UE SET F. UE k IS A CANDIDATE TO PAIR WITH USER f

916 — CALCULATE AVERAGE LDS RATE OF UE k ACROSS $\{RBG\}^\wedge f$ (SAME RBGs AS FIRST UE)

918 — CONVERT AVERAGE LDS RATE TO EFFECTIVE SIMO SINR

920 — CALCULATE POWER SHARING FACTOR FOR THIS HYPOTHESIS OF PAIRING BASED ON THE EFFECTIVE SIMO SINRs

922 — ADJUST THE RATE OF THE PAIRED USERS WITH GIVEN POWER SHARING FACTOR. RATE ADJUSTMENT HAPPEN FOR EACH ASSIGNED RBG SEPARATELY

924 — CALCULATE TOTAL WSR OVER {RBG}f IF IT IS LARGER THAN PREVIOUS ONE AND STORE THE PAIRING HYPOTHESIS AND POWER SHARING FACTOR AS THE DECISION OF PAIRING FOR THIS RBG

926 — NEXT SECOND UE

FIG. 9

FIG. 10

EP 3 130 190 B1

110a — UE

170a

BASE
STATION

120a

190

110b — UE

170b

BASE
STATION

120b

110c — UE

**FIG. 11**

140

PSTN

130

CORE
NETWORK

160

OTHER
NETWORKS

INTERNET

150

190   204

110

TRANSCEIVER — 202

INPUT/
OUTPUT

PROCESSING
UNIT — 200

206

MEMORY — 208

**FIG. 12A**

190   256

PROCESSING
UNIT

250

TX — 252

170

RX

254

MEMORY

258

**FIG. 12B**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20050124370 A1

- US 20140140360 A

### Non-patent literature cited in the description

- Approaching MIMO-OFDM Capacity With Zero-Forcing V-BLAST Decoding and Optimized Power, Rate, and Antenna-Mapping Feedback. **RUI ZHANG et al.** IEEE TRANSACTIONS ON SIGNAL PROCESSING. IEEE SERVICE CENTER, 01 October 2008, vol. 56, 5191-5203

- **HOSEIN NIKOPOUR.** Sparse Code Multiple Access. *2013 IEEE 24th International Symposium on Personal, Indoor and Mobile Radio Communications: Fundamentals and PHY Track,* 08 September 2013, http://ieeexplore.ieee.org/ielx7/6656121/6666091/06666156.pdf?tp=&arnumber=6666 156&isnumber=6666091